(19) Europäisches Patentamt / European Patent Office / Office européen des brevets

(11) **EP 2 592 904 A1**

(12) **EUROPEAN PATENT APPLICATION**

(43) Date of publication:
**15.05.2013 Bulletin 2013/20**

(51) Int Cl.:
***H05B 33/08*** *(2006.01)*

(21) Application number: **12196570.1**

(22) Date of filing: **30.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br><br>(30) Priority: **07.05.2007  US 916496 P**<br>**02.11.2007  US 984855 P**<br><br>(62) Document number(s) of the earlier application(s) in accordance with Art. 76 EPC:<br>**08747200.7 / 2 163 134**<br><br>(71) Applicant: **Koninklijke Philips Electronics N.V.**<br>**5656 AE  Eindhoven (NL)**<br><br>(72) Inventors:<br> • **Lys, Ihor, A.**<br>  **5600 AE Eindhoven (NL)** | • **Shikh, Igor**<br> **5600 AE Eindhoven (NL)**<br><br>(74) Representative: **Van Eeuwijk, Alexander Henricus Waltherus**<br>**Philips**<br>**Intellectual Property & Standards**<br>**P.O. Box 220**<br>**5600 AE Eindhoven (NL)**<br><br>Remarks:<br>This application was filed on 11-12-2012 as a divisional application to the application mentioned under INID code 62. |

(54) **High power factor LED-based lighting apparatus and methods**

(57)    An apparatus and method for a switching power supply (200) for providing power factor correction and an output voltage (32) to at least one LED-based light source (100) via control of a single switch (20), without requiring a voltage regulation feedback control loop associated with the at least one LED-based light source during normal operation of the LED-based light source, is disclosed. At least one controller (360) is coupled to the single switch (20) for controlling the single switch using a fixed off time (FOT) control technique.

FIG. 12

**Description**

**Background**

A DC-DC converter is a well-known electrical device that accepts a DC input voltage and provides a DC output voltage. For many applications, DC-DC converters are configured to provide a regulated DC output voltage to a load based on an unregulated DC input voltage; generally, a DC-DC converter may be employed to transform an unregulated voltage provided by any of a variety of DC power sources to a more appropriate regulated voltage for driving a given load. In many common power supply implementations, the unregulated DC input voltage is derived from an AC power source, such as a 120 Vrms / 60 Hz AC line voltage which is rectified and filtered by a bridge rectifier / filter circuit arrangement. In this case, as discussed further below, protective isolation components generally are employed in the DC-DC converter to ensure safe operation, given the potentially dangerous voltages involved.

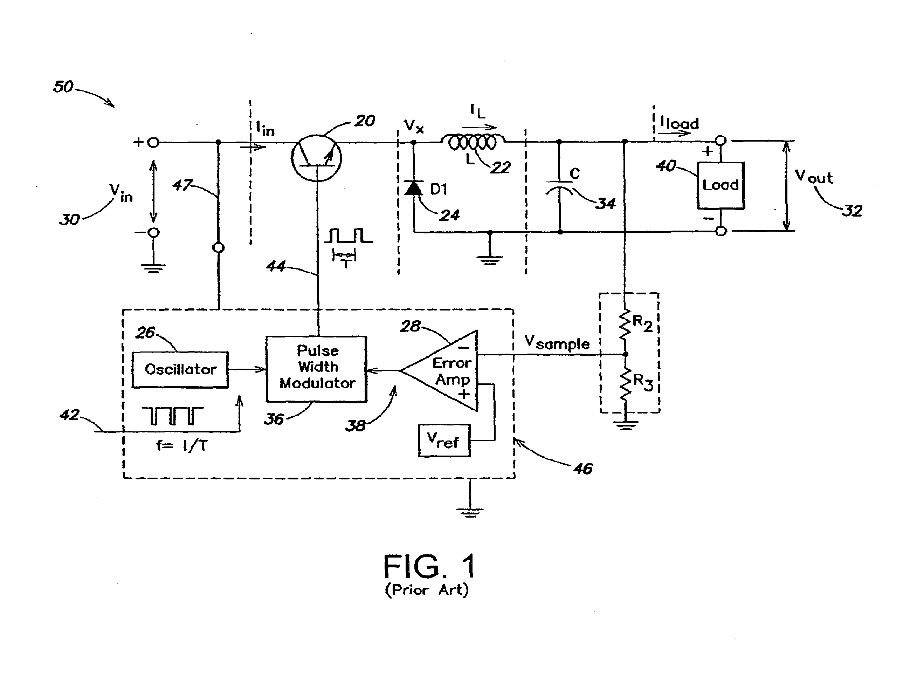

Fig. 1 illustrates a circuit diagram of a conventional step-down DC-DC converter 50 configured to provide a regulated DC output voltage 32 ($V_{out}$) to a load 40, based on a higher unregulated DC input voltage 30 ($V_{in}$). The step-down converter of Fig. 1 also is commonly referred to as a "buck" converter. From a functional standpoint, the buck converter of Fig. 1 generally is representative of other types of DC-DC converters, some examples of which are discussed in turn below.

DC-DC converters like the buck converter of Fig. 1 employ a transistor or equivalent device that is configured to operate as a saturated switch which selectively allows energy to be stored in an energy storage device (e.g., refer to the transistor switch 20 and the inductor 22 in Fig. 1). Although Fig. 1 illustrates such a transistor switch as a bipolar junction transistor (BJT), field effect transistors (FETs) also may be employed as switches in various DC-DC converter implementations. By virtue of employing such a transistor switch, DC-DC converters also are commonly referred to as "switching regulators" due to their general functionality.

In particular, the transistor switch 20 in the circuit of Fig. 1 is operated to periodically apply the unregulated DC input voltage 30 ($V_{in}$) across an inductor 22 ($L$) for relatively short time intervals (in Fig. 1 and the subsequent figures, unless otherwise indicated, a single inductor is depicted to schematically represent one or more actual inductors arranged in any of a variety of serial/parallel configurations to provide a desired inductance). During the intervals in which the transistor switch is "on" or closed (i.e., passing the input voltage $V_{in}$ to the inductor), current flows through the inductor based on the applied voltage and the inductor stores energy in its magnetic field. When the switch is turned "off" or opened (i.e., the DC input voltage is removed from the inductor), the energy stored in the inductor is transferred to a filter capacitor 34 which functions to provide a relatively smooth DC output voltage $V_{out}$ to the load 40 (i.e., the capacitor provides essentially continuous energy to the load between inductor energy storage cycles).

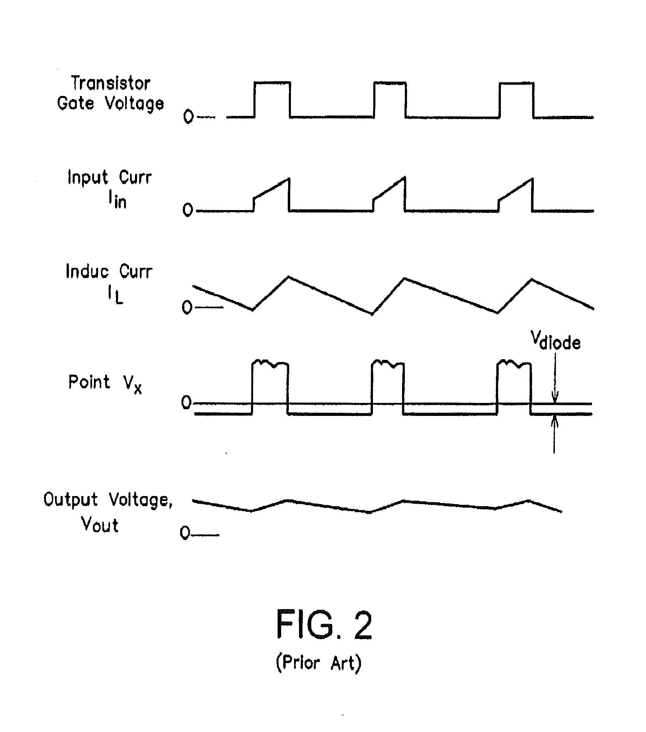

More specifically, Fig. 1, when the transistor switch 20 is on, a voltage $V_L = V_{out} - V_{in}$ is applied across the inductor 22. This applied voltage causes a linearly increasing current $I_L$ to flow through the inductor (and to the load and the capacitor) based on the relationship $V_L = L \cdot dI_L/dt$. When the transistor switch 20 is turned off, the current $I_L$ through the inductor continues to flow in the same direction, with the diode 24 (D1) now conducting to complete the circuit. As long as current is flowing through the diode, the voltage $V_L$ across the inductor is fixed at $V_{out} - V_{diode}$, causing the inductor current $I_L$ to decrease linearly as energy is provided from the inductor's magnetic field to the capacitor and the load. Fig. 2 is a diagram illustrating various signal waveforms for the circuit of Fig. 1 during the switching operations described immediately above.

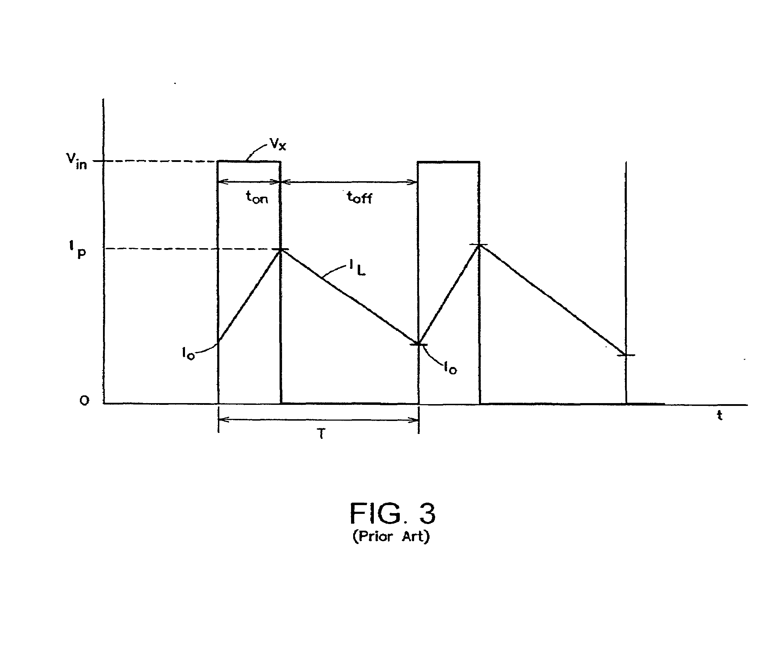

Conventional DC-DC converters may be configured to operate in different modes, commonly referred to as "continuous" mode and "discontinuous" mode. In continuous mode operation, the inductor current $I_L$ remains above zero during successive switching cycles of the transistor switch, whereas in discontinuous mode, the inductor current starts at zero at the beginning of a given switching cycle and returns to zero before the end of the switching cycle. To provide a somewhat simplified yet informative analysis of the circuit of Fig. 1, the discussion below considers continuous mode operation, and assumes for the moment that there are no voltage drops across the transistor switch when the switch is on (i.e., conducting) and that there is a negligible voltage drop across the diode D1 while the diode is conducting current. With the foregoing in mind, the changes in inductor current over successive switching cycles may be examined with the aid of Fig. 3.

Fig. 3 is a graph on which is superimposed the voltage at the point $V_x$ shown in Fig. 1 (again, ignoring any voltage drop across the diode D1) based on the operation of the transistor switch 20, and the current through the inductor $I_L$ for two consecutive switching cycles. In Fig. 3, the horizontal axis represents time $t$ and a complete switching cycle is represented by the time period $T$, wherein the transistor switch "on" time is indicated as $t_{on}$ and the switch "off" time is indicated as $t_{off}$ (i. e., $T = t_{on} + t_{off}$).

For steady state operation, it should be appreciated that the inductor current $I_L$ at the start and end of a switching cycle is essentially the same, as can be observed in Fig. 3 by the indication $I_o$. Accordingly, from the relation $V_L = L \cdot dI_L/dt$, the change of current $dI_L$ over one switching cycle is zero, and may be given by:

$$dI_L = 0 = \frac{1}{L}\left( \int_0^{t_{on}} (V_{in} - V_{out})\,dt + \int_{t_{on}}^{T} (-V_{out})\,dt \right)$$

which simplifies to

$$(V_{in} - V_{out})\,t_{on} - (V_{out})(T - t_{on}) = 0$$

or

$$\frac{V_{out}}{V_{in}} = \frac{t_{on}}{T} = D,$$

where $D$ is defined as the "duty cycle" of the transistor switch, or the proportion of time per switching cycle that the switch is on and allowing energy to be stored in the inductor. From the foregoing, it can be seen that the ratio of the output voltage to the input voltage is proportional to $D$; namely, by varying the duty cycle $D$ of the switch in the circuit of Fig. 1, the output voltage $V_{out}$ may be varied with respect to the input voltage $V_{in}$ but cannot exceed the input voltage, as the maximum duty cycle $D$ is 1.

Hence, as mentioned earlier, the conventional buck converter of Fig. 1 is particularly configured to provide to the load 40 a regulated output voltage $V_{out}$ that is lower than the input voltage $V_{in}$. To ensure stability of the output voltage $V_{out}$, as shown in Fig. 1, the buck converter employs a feedback control loop 46 to control the operation of the transistor switch 20. Generally, as indicated in Fig. 1 by connection 47, power for various components of the feedback control loop 46 may be derived from the DC input voltage $V_{in}$ or alternatively another independent source of power.

Still referring to Fig. 1, in the feedback control loop 46, a scaled sample voltage $V_{sample}$ of the DC output voltage $V_{out}$ is provided as an input to the feedback control loop 46 (e.g., via the resistors $R_2$ and $R_3$) and compared by an error amplifier 28 to a reference voltage $V_{ref}$. The reference voltage $V_{ref}$ is a stable scaled representation of the desired regulated output voltage $V_{out}$. The error amplifier 28 generates an error signal 38 (in this example, a positive voltage signal over some predetermined range) based on the comparison of $V_{sample}$ and $V_{ref}$ and the magnitude of this error signal ultimately controls the operation of the transistor switch 20, which in turn adjusts the output voltage $V_{out}$ via adjustments to the switch's duty cycle. In this manner, the feedback control loop maintains a stable regulated output voltage $V_{out}$.

More specifically, the error signal 38 serves as a control voltage for a pulse width modulator 36 which also receives a pulse stream 42 having a frequency $f = 1/T$ provided by an oscillator 26. In conventional DC-DC converters, exemplary frequencies $f$ for the pulse stream 42 include, but are not limited to, a range from approximately 50 kHz to 100 kHz. The pulse width modulator 36 is configured to use both the pulse stream 42 and the error signal 38 to provide an on/off control signal 44 that controls the duty cycle of the transistor switch 20. In essence, a pulse of the pulse stream 42 acts as a "trigger" to cause the pulse width modulator to turn the transistor switch 20 on, and the error signal 38 determines how long the transistor switch stays on (i.e., the length of the time period $t_{on}$ and hence the duty cycle $D$).

For example, if the error signal 38 indicates that the sampled output voltage $V_{sample}$ is higher than $Vr_{ef}$ (i.e., the error signal 38 has a relatively lower value), the pulse width modulator 36 is configured to provide a control signal 44 with relatively shorter duration "on" pulses or a lower duty cycle, thereby providing relatively less energy to the inductor while the transistor switch 20 is on. In contrast, if the error signal 38 indicates that $V_{sample}$ is lower than $V_{ref}$ (i.e., the error signal has a relatively higher value), the pulse width modulator is configured to provide a control signal with relatively longer duration "on" pulses or a higher duty cycle, thereby providing relatively more energy to the inductor while the transistor switch 20 is on. Accordingly, by modulating the duration of the "on" pulses of the control signal 44 via the error signal 38, the output voltage $V_{out}$ is regulated by the feedback control loop 46 to approximate a desired output voltage represented by $V_{ref}$.

Other types of conventional DC-DC converters in addition to the buck converter discussed above in connection with Fig. 1 include, for example, a step-up or "boost" converter which provides a regulated DC output voltage that is higher than the input voltage, an inverting or "buck-boost" converter that may be configured to provide a regulated DC output voltage that is either lower or higher than the input voltage and has a polarity opposite to that of the input voltage, and a "CUK" converter that is based on capacitive coupled energy transfer principles. Like the buck converter, in each of these other types of converters the duty cycle $D$ of the transistor switch determines the ratio of the output voltage $V_{out}$ to the input voltage $V_{in}$.

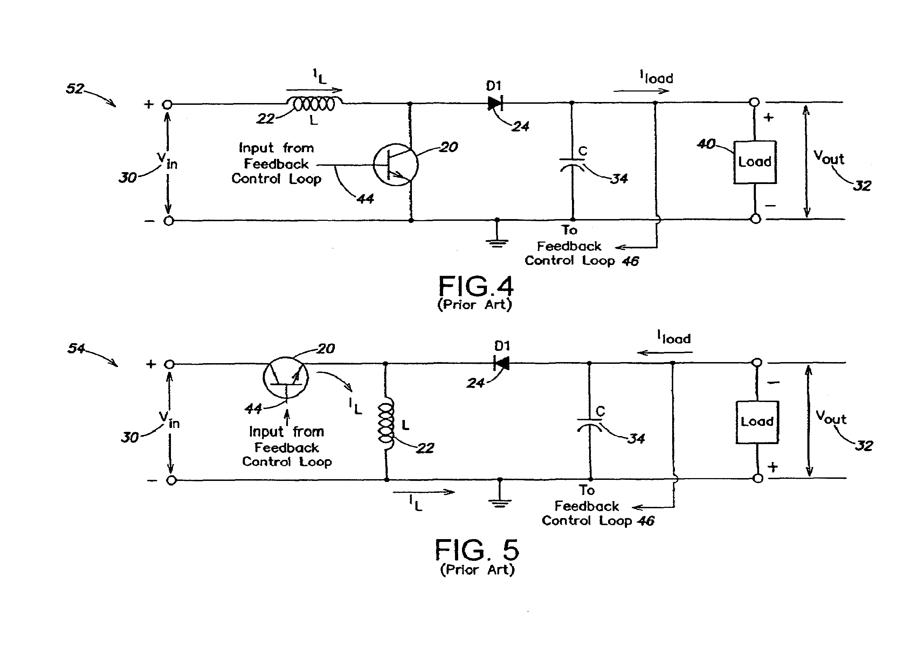

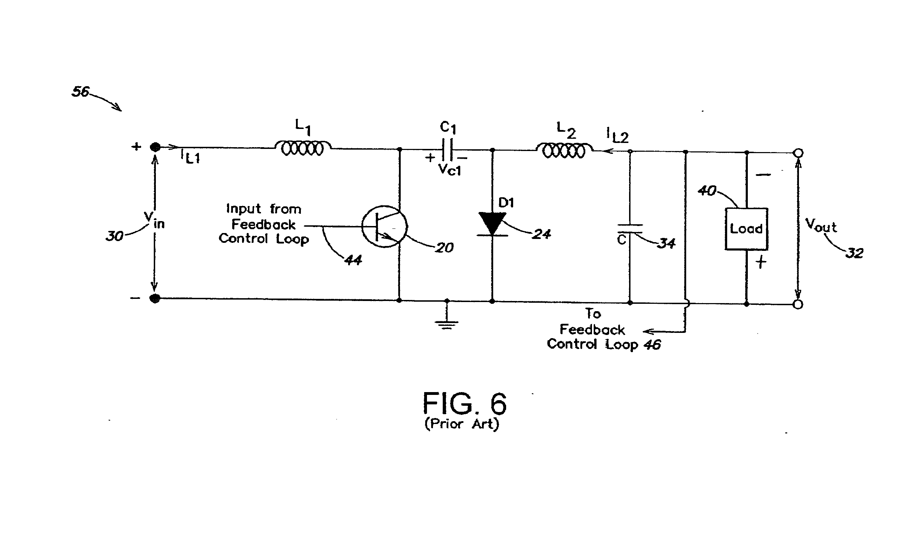

Fig. 4 illustrates a conventional boost converter 52 and Fig. 5 illustrates a conventional buck-boost converter or inverting regulator 54. Both of these converters may be analyzed similarly to the buck converter of Fig. 1 to determine how the duty cycle $D$ affects the ratio $V_{out}/V_{in}$. Fig. 6 illustrates an example of a "CUK" converter 56, which employs capacitive coupling rather than primarily inductive coupling. The circuit of Fig. 6 is derived from a duality principle based on the buck-boost converter of Fig. 5 (i.e., the relationship between the duty cycle $D$ and the ratio $V_{out}/V_{in}$ in the CUK converter is identical to that of the buck-boost converter). One noteworthy characteristic of the CUK converter is that the input and output inductors $L_1$ and $L_2$ shown in Fig. 6 create a substantially smooth current at both the input and the output of the converter, while the buck, boost, and buck-boost converters have either a pulsed input current (e.g., see Fig. 2, second diagram from top) or a pulsed output current.

For all of the converters shown in Figs. 4-6, the details of the voltage regulation feedback control loop have been omitted for simplicity; however, it should be appreciated that like the buck converter shown in Fig. 1, each of the converters shown in Figs. 4-6 would include a feedback control loop to provide output voltage regulation, as discussed above in connection with Fig. 1.

In some conventional DC-DC converter configurations, an input current sensing and limiting technique also may be employed to facilitate improved operation of the converter, especially in continuous mode. Such converters commonly are referred to as "current-mode" regulators. One of the issues addressed by current-mode regulators is that of potentially unpredictable energy build-up in the inductor during successive switching cycles.

For example, with reference again to Fig. 3, since the inductor current $I_L$ remains above zero in continuous mode, the energy stored in the inductor's magnetic field at any given time may depend not only on energy stored during the most recent switching cycle, but also on residual energy that was stored during one or more previous switching cycles. This situation generally results in a somewhat unpredictable amount of energy being transferred via the inductor (or other energy transfer element) in any given switching cycle. Averaged over time, however, the smoothing function of the output capacitor 34 in the circuits discussed above, together with the voltage regulation function provided by the feedback control loop, facilitate a substantially controlled delivery of power to the load based on the regulated output voltage $V_{out}$.

The feedback control loop in the circuits discussed above, however, generally has a limited response time, and there may be some changes in input conditions (e.g., $V_{in}$) and/or output power requirements of the DC-DC converter that could compromise the stability of the feedback control loop. In view of the foregoing, current-mode regulators generally are configured to limit the peak current $I_P$ through the inductor when the transistor switch is on (e.g., refer to Fig. 3). This input current-limiting feature also helps to prevent excessive inductor currents in the event of significant changes in input conditions and/or significant changes in load requirements which call for (via the voltage regulation feedback control loop) a duty cycle that results in an inductor current which may adversely affect the stability of the feedback loop, and/or be potentially damaging to the circuit.

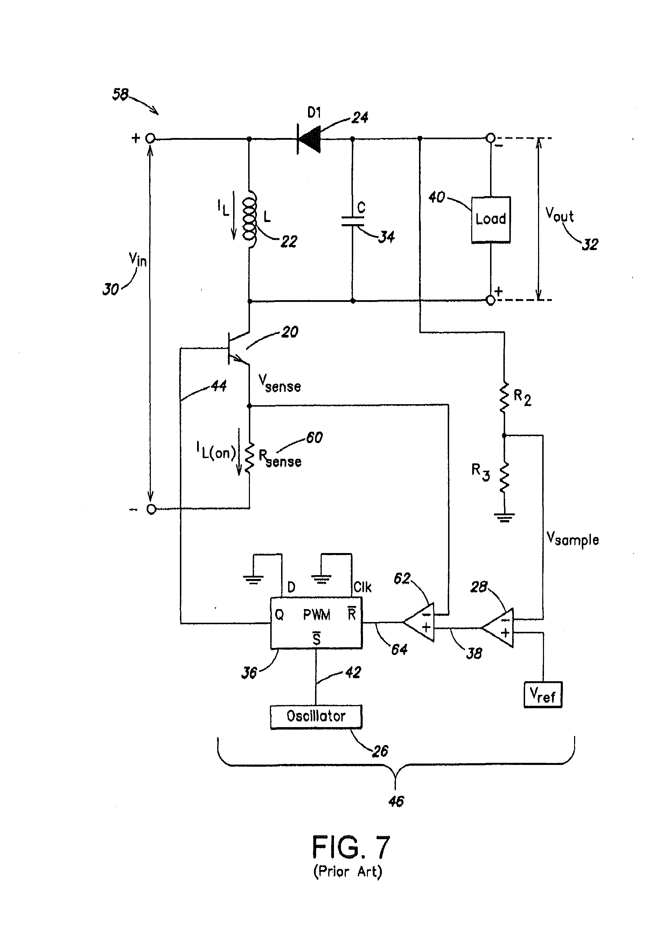

Fig. 7 is a circuit diagram illustrating an example of a current-mode regulator 58 based on the buck-boost converter configuration shown in Fig. 5. In the diagram of Fig. 7, details of the voltage regulation feedback control loop are shown to facilitate the discussion of input current limiting. It should be appreciated that the concepts discussed below in connection with the input current sensing and limiting features of the circuit of Fig. 7 may be similarly applied to the other types of conventional DC-DC converters discussed herein.

The feedback control loop which controls the operation of the transistor switch 20 in the current-mode circuit of Fig. 7 differs from that shown in Fig. 1 in that the circuit of Fig. 7 additionally includes an input current sensing device 60 (i.e., the resistor $R_{sense}$) and a comparator 62. Also, the pulse width modulator 36 used in the feedback control loop in the example of Fig. 7 is a D-type flip-flop with set and reset control. As shown in Fig. 7, the flip-flop pulse width modulator is arranged such that its "D" and "Clk" inputs are tied to ground, the oscillator 26 provides the pulse stream 42 to the "Set" input of the flip-flop (low activated, $\overline{S}$), the comparator 62 provides a signal 64 to the "Reset" input of the flip-flop (low activated, $\overline{R}$), and the flip-flop's "Q" output provides the pulse width modulated control signal 44.

In this arrangement, when the transistor switch 20 is off or open, there is no current through the resistor $R_{sense}$; hence, the voltage at the inverting input of the comparator 62 is zero. Recall also from Fig. 1 that the error signal 38 in this example is a positive voltage over some predetermined range that indicates the difference between the sampled output voltage and $V_{ref}$. Thus, when the transistor switch 20 is open, the signal 64 output by the comparator is a logic high signal (i.e., the reset input $\overline{R}$ of the flip-flop is not activated).

With the flip-flop in this state, the next low-going pulse of the pulse stream 42 activates the flip-flop's set input $\overline{S}$, thereby driving the flip-flop's Q output to a logic high state and turning the transistor switch 20 on. As discussed above, this causes the inductor current $I_L$ to increase, and with the switch closed this inductor current also passes through the resistor $R_{sense}$ ($I_{L(on)}$), thereby developing a voltage $V_{sense}$ across this resistor. When the voltage $V_{sense}$ exceeds the error signal 3 8, the signal 64 output by the comparator 62 switches to a logic low state, thereby activating the flip-flop's reset input $\overline{R}$ and causing the Q output to go low (and the transistor switch 20 to turn off). When the transistor is turned off, the voltage $V_{sense}$ returns to zero and the signal 64 returns to a logic high state, thereby deactivating the flip flop's reset input. At this point, the next occurrence of a low-going pulse of the pulse stream 42 activates the flip flop's set input

$\overline{S}$ to start the cycle over again.

Accordingly, in the circuit of Fig. 7, the relationship between $V_{sense}$ and the error signal 38 determines the duty cycle $D$ of the transistor switch 20; specifically, if the voltage $V_{sense}$ exceeds the error signal 38, the switch opens. Based on the foregoing, the peak current $I_P$ through the inductor (see Fig. 3) may be predetermined by selecting an appropriate value for the resistor $R_{sense}$, given the expected range of the error signal 38. The action of the comparator 62 ensures that even in situations where changes in load requirements cause $V_{sample}$ to be substantially below $V_{ref}$ (resulting in a relatively higher magnitude error signal and a potentially greater duty cycle), the current through the inductor ultimately may limit the duty cycle so that the inductor current does not exceed a predetermined peak current. Again, this type of "current-mode" operation generally enhances the stability of the feedback control loop and reduces potentially damaging conditions in the DC-DC converter circuitry.

For many electronics applications, power supplies may be configured to provide a regulated DC output voltage from an input AC line voltage (e.g., 120 $V_{rms}$, 60 Hz). For example, conventional "linear" power supplies typically employ a substantial (relatively large and heavy) 60 Hz power transformer to reduce the input AC line voltage at approximately 120 $V_{rms}$ to some lower (and less dangerous) secondary AC voltage. This lower secondary AC voltage then is rectified (e.g., by a diode bridge rectifier) and filtered to provide an unregulated DC voltage. Often, a linear regulator is then employed to provide a predetermined regulated DC voltage output based on the unregulated DC voltage.

By utilizing the unique switching action of a DC-DC converter, it is possible to design a power supply that does not require the substantial 60 Hz power transformer at the input stage typical of linear power supplies, thereby in many cases significantly reducing the size and weight and increasing the efficiency of the power supply. For example, power supplies based on linear regulators generally have power conversion efficiencies on the order of approximately 50% or lower, whereas power supplies based on switching regulators have efficiencies on the order of approximately 80% or higher.

In some power supplies based on switching regulators, an unregulated DC voltage may be provided as an input to a DC-DC converter directly from a rectified and filtered AC line voltage. Such an arrangement implies that there is no protective isolation between the AC line voltage and the DC input voltage to the DC-DC converter. Also, the unregulated DC input voltage to the converter may be approximately 160 Volts DC (based on a rectified 120 $V_{rms}$ line voltage) or higher (up to approximately 400 Volts if power factor correction is employed), which is potentially quite dangerous. In view of the foregoing, DC-DC converters for such power supply arrangements typically are configured with isolation features to address these issues so as to generally comport with appropriate safety standards.

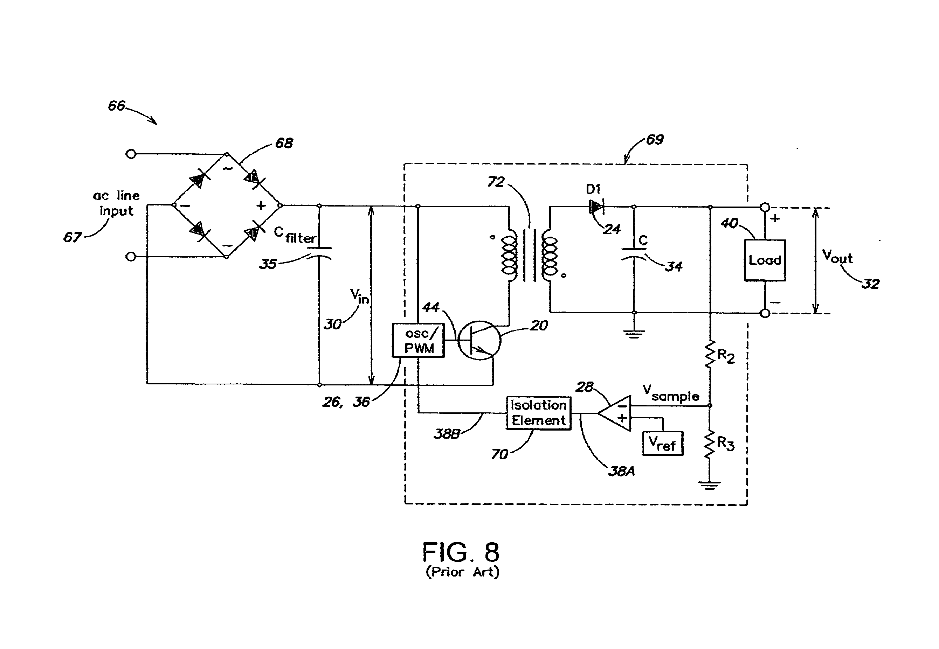

Fig. 8 is a circuit diagram illustrating an example of such a power supply 66 incorporating a DC-DC converter or switching regulator. As discussed above, the power supply 66 receives as an input an AC line voltage 67 which is rectified by a bridge rectifier 68 and filtered by a capacitor 35 ($C_{filter}$) to provide an unregulated DC voltage as an input $V_{in}$ to the DC-DC converter portion 69. The DC-DC converter portion 69 is based on the inverting regulator (buck-boost) arrangement shown in Fig. 5; however, in Fig. 8, the energy-storage inductor has been replaced with a high frequency transformer 72 to provide isolation between the unregulated high DC input voltage $V_{in}$ and the DC output voltage $V_{out}$. Such a DC-DC converter arrangement incorporating a transformer rather than an inductor commonly is referred to as a "flyback" converter.

In the circuit of Fig. 8, the "secondary side" of the converter portion 69 (i.e., the diode D1 and the capacitor C) is arranged such that the converter provides an isolated DC output voltage. The DC-DC converter portion 69 also includes an isolation element 70 (e.g., a second high-frequency transformer or optoisolator) in the voltage regulation feedback control loop to link the error signal from the error amplifier 28 to the modulator 36 (the error signal input to and output from the isolation element 70 is indicated by the reference numerals 38A and 38B).

In view of the various isolation features in the circuit of Fig. 8, although not explicitly shown in the figure, it should be appreciated that power for the oscillator/modulation circuitry generally may be derived from the primary side unregulated higher DC input voltage $V_{in}$, whereas power for other elements of the feedback control loop (e.g., the reference voltage $V_{ref}$, the error amplifier 28) may be derived from the secondary side regulated DC output voltage $V_{out}$. Alternatively, as mentioned above, power for the components of the feedback loop may in some cases be provided by an independent power source.

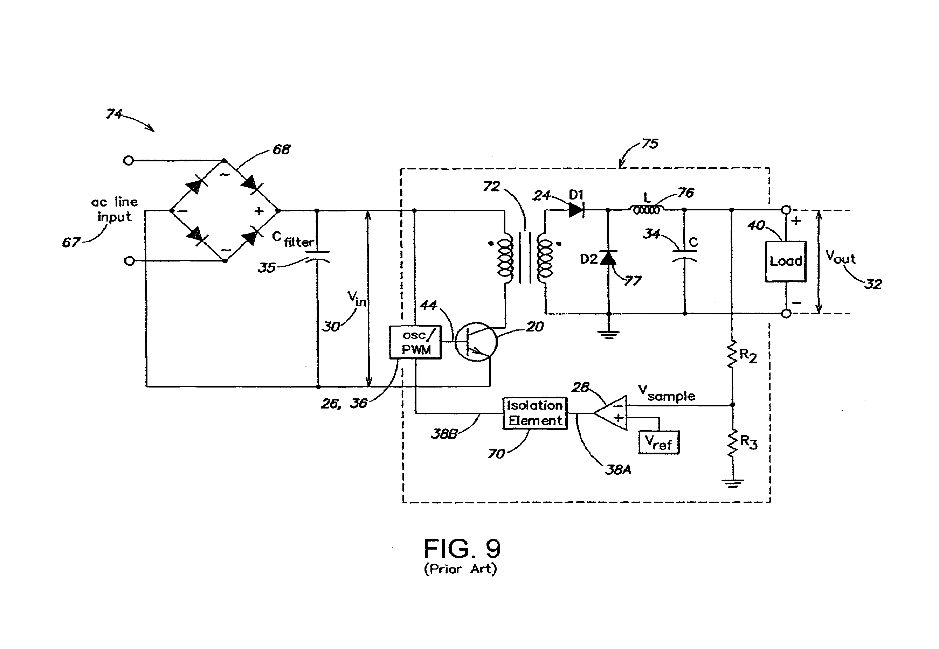

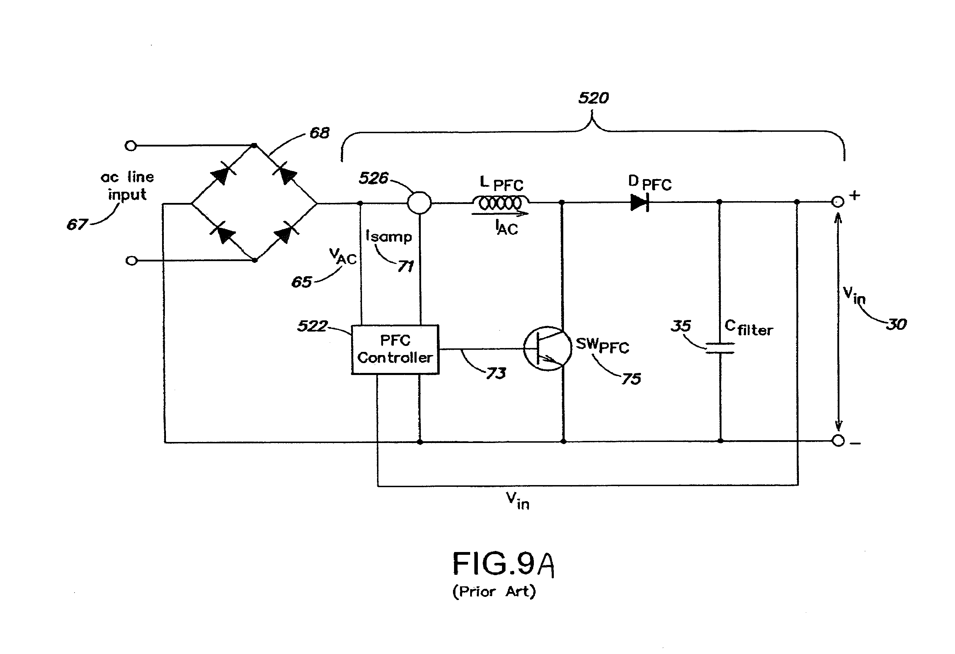

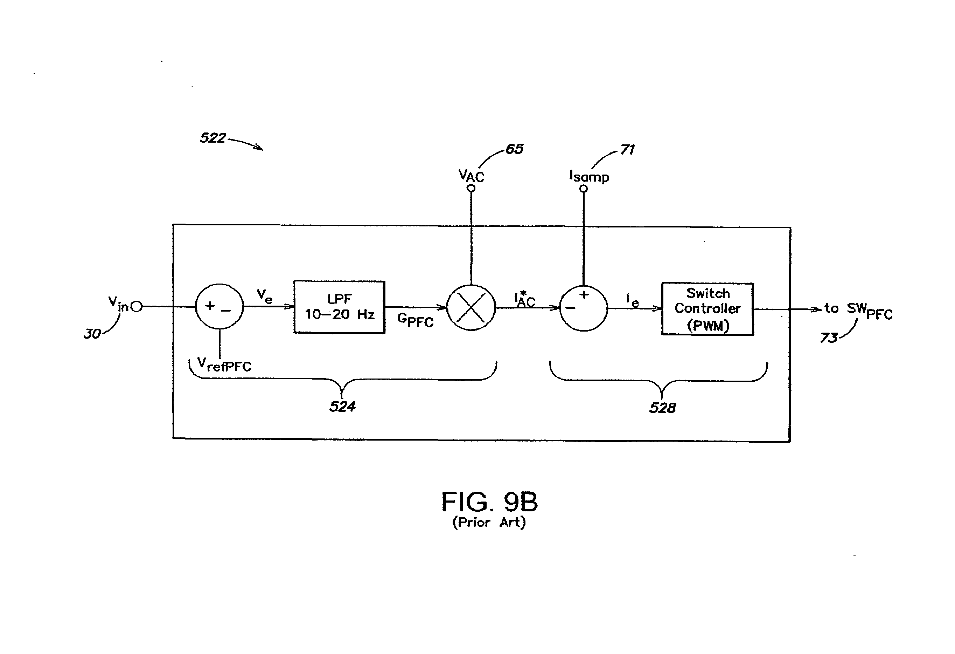

Fig. 9 is a circuit diagram illustrating yet another example of a power supply 74 incorporating a different type of DC-DC converter that provides input-output isolation. The DC-DC converter portion 75 of the power supply 74 shown in Fig. 9 commonly is referred to as a "forward" converter, and is based on the step-down or "buck" converter discussed above in connection with Fig. 1. In particular, the converter portion 75 again includes a transformer 72 like the circuit of Fig. 8, but also includes a secondary side inductor 76 and additional diode 77 (D2) not present in the flyback converter shown in Fig. 8 (note that the diode D2, the inductor 76 and the capacitor 34 resemble the buck converter configuration illustrated in Fig. 1). In the forward converter, the diode D1 ensures that only positive transformer secondary voltages are applied to the output circuit while D2 provides a circulating path for current in the inductor 76 when the transformer voltage is zero or negative.

Other well-known modifications may be made to the forward converter shown in Fig. 9 to facilitate "full-wave" conduction in the secondary circuit. Also, while not indicated explicitly in the figures, both of the exemplary power supplies shown in Figs. 8-9 may be modified to incorporate current-mode features as discussed above in connection with Fig. 7 (i.e., to limit the current in the primary winding of the transformer 72).

Because of the switching nature of DC-DC converters, these apparatus generally draw current from a power source in a pulsed manner. This condition may have some generally undesirable effects when DC-DC converters draw power from an AC power source (e.g., as in the power supply arrangements of Figs. 8-9).

In particular, for maximum power efficiency from an AC power source, the input current ultimately drawn from the AC line voltage ideally should have a sinusoidal wave shape and be in phase with the AC line voltage. This situation commonly is referred to as "unity power factor," and generally results with purely resistive loads. The switching nature of the DC-DC converter and resulting pulsed current draw (i.e., and corresponding significantly non-sinusoidal current draw from the AC power source) causes these apparatus to have less than unity power factor, and thus less than optimum power efficiency. Additionally, with reference again to Figs. 8-9, the presence of a substantial filter capacitor 35 ($C_{filter}$) between the bridge rectifier 68 and DC-DC converter 69 further contributes to making the overall load on the bridge rectifier less resistive, resulting in appreciably less than unity power factor.

More specifically, the "apparent power" drawn from an AC power source by a load that is not a purely resistive load is given by multiplying the RMS voltage applied to the load and the RMS current drawn by the load. This apparent power reflects how much power the device appears to be drawing from the source. However, the actual power drawn by the load may be less than the apparent power, and the ratio of actual to apparent power is referred to as the load's "power factor." For example, a device that draws an apparent power of 100 Volt-amps and has a 0.5 power factor actually consumes 50 Watts of power, not 100 Watts; stated differently, in this example, a device with a 0.5 power factor appears to require twice as much power from the source than it actually consumes.

As mentioned above, conventional DC-DC converters characteristically have significantly less than unity power factor due to their switching nature and pulsed current draw. Additionally, if the DC-DC converter were to draw current from the AC line voltage with only intervening rectification and filtering, the pulsed non-sinusoidal current drawn by the DC-DC converter would place unwanted stresses and introduce generally undesirable noise and harmonics on the AC line voltage (which may adversely affect the operation of other devices).

In view of the foregoing, some conventional switching power supplies are equipped with, or used in conjunction with, power factor correction apparatus that are configured to address the issues noted above and provide for a more efficient provision of power from an AC power source. In particular, such power factor correction apparatus generally operate to "smooth out" the pulsed current drawn by a DC-DC converter, thereby lowering its RMS value, reducing undesirable harmonics, improving the power factor, and reducing the chances of an AC mains circuit breaker tripping due to peak currents.

In some conventional arrangements, a power factor correction apparatus is itself a type of switched power converter device, similar in construction to the various DC-DC converters discussed above, and disposed for example between an AC bridge rectifier and a filtering capacitor that is followed by a DC-DC converter. This type of power factor correction apparatus acts to precisely control its input current on an instantaneous basis so as to substantially match the waveform and phase of its input voltage (i.e., a rectified AC line voltage). In particular, the power factor correction apparatus may be configured to monitor a rectified AC line voltage and utilize switching cycles to vary the amplitude of the input current waveform to bring it closer into phase with the rectified line voltage.

Fig. 9A is a circuit diagram generally illustrating such a conventional power factor correction apparatus 520. As discussed above, the power factor correction apparatus is configured so as to receive as an input 65 the full-wave rectified AC line voltage $V_{AC}$ from the bridge rectifier 68, and provide as an output the voltage $V_{in}$ that is then applied to a DC-DC converter portion of a power supply (e.g., with reference to Figs. 8-9, the power factor correction apparatus 520, including the filter capacitor 35 across an output of the apparatus 520, would be disposed between the bridge rectifier 68 and the DC DC converter portions 69 and 75, respectively). As can be seen in Fig. 9A, a common example of a power factor correction apparatus 520 is based on a boost converter topology (see Fig. 4 for an example of a DC-DC converter boost configuration) that includes an inductor $L_{PFC}$, a switch $SW_{PFC}$, a diode $D_{PFC}$, and the filter capacitor 35 across which the voltage $V_{in}$ is generated.

The power factor correction apparatus 520 of Fig. 9A also includes a power factor correction (PFC) controller 522 that monitors the rectified voltage $V_{AC}$, the generated voltage $V_{in}$ provided as an output to the DC-DC converter portion, and a signal 71 ($I_{samp}$) representing the current $I_{AC}$ drawn by the apparatus 520. As illustrated in Fig. 9A, the signal $I_{samp}$ may be derived from a current sensing element 526 (e.g., a voltage across a resistor) in the path of the current $I_{AC}$ drawn by the apparatus. Based on these monitored signals, the PFC controller 522 is configured to output a control signal 73 to control the switch 75 ($SW_{PFC}$) such that the current $I_{AC}$ has a waveform that substantially matches, and is in phase with, the rectified voltage $V_{AC}$.

Fig. 9B is a diagram that conceptually illustrates the functionality of the PFC controller 522. Recall that, generally speaking, the function of the power factor correction apparatus 520 as a whole is to make itself look essentially like a resistance to an AC power source; in this manner, the voltage provided by the power source and the current drawn from the power source by the "simulated resistance" of the power factor correction apparatus have essentially the same waveform and are in phase, resulting in substantially unity power factor. Accordingly, a quantity $R_{PFC}$ may be considered as representing a conceptual simulated resistance of the power factor correction apparatus, such that, according to Ohm's law,

$$V_{AC} = I_{AC} \ R_{PFC}$$

or

$$G_{PFC} \ V_{AC} = I_{AC},$$

where $G_{PFC} = 1/R_{PFC}$ and represents an effective conductance of the power factor correction apparatus 520.

With the foregoing in mind, the PFC controller 522 shown in Fig. 9B implements a control strategy based on two feedback loops, namely a voltage feedback loop and a current feedback loop. These feedback loops work together to manipulate the instantaneous current $I_{AC}$ drawn by the power factor correction apparatus based on a derived effective conductance $G_{PFC}$ for the power factor correction apparatus. To this end, a voltage feedback loop 524 is implemented by comparing the voltage $V_{in}$ (provided as an output across the filter capacitor 35) to a reference voltage $V_{refPFC}$ representing a desired regulated value for the voltage $V_{in}$. The comparison of these values generates an error voltage signal $V_e$ which is applied to an integrator/low pass filter having a cutoff frequency of approximately 10-20Hz. This integrator/low pass filter imposes a relatively slow response time for the overall power factor control loop, which facilitates a higher power factor; namely, because the error voltage signal $V_e$ changes slowly compared to the line frequency (which is 50 or 60Hz), adjustments to $I_{AC}$ due to changes in the voltage $V_{in}$ (e.g., caused by sudden and/or significant load demands) occur over multiple cycles of the line voltage rather than abruptly during any given cycle.

In the controller shown in Fig. 9B, a DC component of the slowly varying output of the integrator/low pass filter essentially represents the effective conductance $G_{PFC}$ of the power factor correction apparatus; hence, the output of the voltage feedback loop 524 provides a signal representing the effective conductance $G_{PFC}$. Accordingly, based on the relationship given above, the PFC controller 522 is configured to multiply this effective conductance by the monitored rectified line voltage $V_{AC}$ to generate a reference current signal $I^*_{AC}$ representing the desired current to be drawn from the line voltage, based on the simulated resistive load of the apparatus 520. This signal $I^*_{AC}$ thus provides a reference or "set-point" input to the current control loop 528.

In particular, as shown in Fig. 9B, in the current control loop 528, the signal $I^*_{AC}$ is compared to the signal $I_{samp}$ which represents the actual current $I_{AC}$ being drawn by the apparatus 520. The comparison of these values generates a current error signal $I_e$ that serves as a control signal for a pulse width modulated (PWM) switch controller (e.g., similar to that discussed above in connection with Fig. 7). The PWM switch controller in turn outputs a signal 73 to control the switch $SW_{PFC}$ so as to manipulate the actual current $I_{AC}$ being drawn (refer again to Fig. 9A). Exemplary frequencies commonly used for the control signal 73 output by the PWM switch controller (and hence for the switch $SW_{PFC}$) are on the order of approximately 100 kHz. With the foregoing in mind, it should be appreciated that it is the resulting average value of a rapidly varying $I_{AC}$ that resembles a full-wave rectified sinusoidal waveform (having a frequency of two times the frequency of the line voltage), with an approximately 100 kHz ripple resulting from the switching operations. Accordingly, the current feedback loop and the switch control elements have to have enough bandwidth to follow a full wave rectified waveform (hence a bandwidth of a few kHz generally is more than sufficient).

Thus, in the conventional power factor correction schemes outlined in connection with Figs. 9A-9B, the power factor correction apparatus 520 provides as an output the regulated voltage $V_{in}$ across the capacitor 35, from which current may be drawn as needed by a load coupled to $V_{in}$ (e.g., by a subsequent DC-DC converter portion of a power supply). For sudden and/or excessive changes in load power requirements, the instantaneous value of the voltage $V_{in}$ may change dramatically; for example, in instances of sudden high load power requirements, energy reserves in the capacitor are drawn upon and $V_{in}$ may suddenly fall below the reference $V_{refPFC}$. As a result, the voltage feedback loop 524, with a relatively slow response time, attempts to adjust $V_{in}$ by causing the power factor correction apparatus to draw more current from the line voltage. Due to the relatively slow response time, though, this action may in turn cause an over-voltage condition for $V_{in}$, particularly if the sudden/excessive demand from the load no longer exists by the time an adjustment to $V_{in}$ is made. The apparatus then tries to compensate for the over-voltage condition, again subject to the slow response time of the voltage feedback loop 524, leading to some degree of potential instability. Similar sudden changes (either under- or over-voltage conditions) to $V_{in}$ may result from sudden/excessive perturbations on the line voltage 67, to which the apparatus 520 attempts to respond in the manner described above.

From the foregoing, it should be appreciated that the slow response time that on the one hand facilitates power factor correction at the same time may result in a less than optimum input/output transient response capability. Accordingly, the voltage feedback loop response time/bandwidth in conventional power factor correction apparatus generally is selected to provide a practical balance between reasonable (but less than optimal) power factor correction and reasonable (but less than optimal) transient response.

In sum, it should be appreciated that the foregoing discussion in connection with Figs. 9A-9B is primarily conceptual in nature to provide a general understanding of the power factor correction functionality. In practice, integrated circuit power factor correction controllers presently are available from various sources (e.g., Fairchild Semiconductor ML4821 PFC Controller, ST Microelectronics L6561 and L6562). In particular, the ST Microelectronics L6561 and L6562 controllers are configured to facilitate power factor correction based on a boost converter topology (see Fig. 4 for an example of a DC-DC converter boost configuration). The L6561 and L6562 controllers utilize a "transition mode" (TM) technique (i.e., operating around a boundary between continuous and discontinuous modes) commonly employed for power factor correction in relatively low power applications. Details of the L6561 controller and the transition mode technique are discussed in ST Microelectronics Application Note AN966, "L6561 Enhanced Transition Mode Power Factor Corrector," by Claudio Adragna, March 2003, available at http://www.st.com and incorporated herein by reference. Differences between the L6561 and L6562 controllers are discussed in ST Microelectronics Application Note AN1757, "Switching from the L6561 to the L6562," by Luca Salati, April 2004, also available at http://www.st.com and incorporated herein by reference. For purposes of the present disclosure, these two controllers generally are discussed as having similar functionality.

In addition to facilitating power factor correction, the ST Microelectronics L6561 and L6562 controllers may be alternatively employed in a "non-standard" configuration as a controller in a flyback DC-DC converter implementation. In particular, with reference again to Fig. 8, the L6561 may be used to accomplish the general functionality of the PWM controller 36 that controls the transistor switch 20. Details of this and related alternative applications of the L6561 controller are discussed in ST Microelectronics Application Note AN1060, "Flyback Converters with the L6561 PFC Controller," by C. Adragna and G. Garravarik, January 2003, ST Microelectronics Application Note AN1059, "Design Equations of High-Power-Factor Flyback Converters based on the L6561," by Claudio Adragna, September 2003, and ST Microelectronics Application Note AN1007, "L6561-based Switcher Replaces Mag Amps in Silver Boxes," by Claudio Adragna, October 2003, each of which is available at http://www.st.com and incorporated herein by reference.

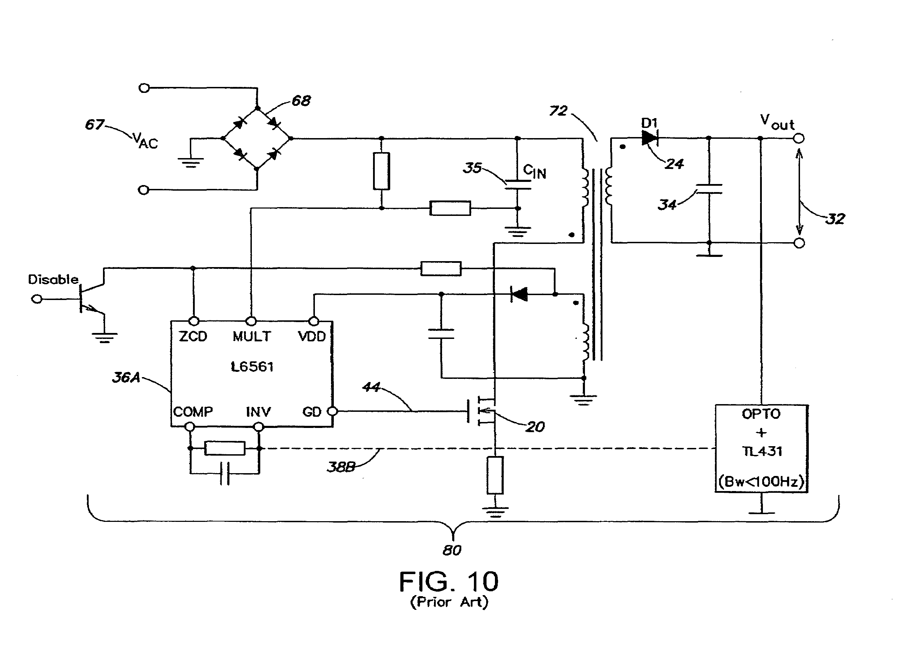

Specifically, Application Notes AN1059 and AN1060 discuss one exemplary configuration for an L6561-based flyback converter (High-PF flyback configuration) that operates in transition mode and exploits the aptitude of the L6561 controller for performing power factor correction, thereby providing a high power factor single switching stage DC-DC converter for relatively low load power requirements (e.g., up to approximately 30 Watts). Fig. 10 illustrates this configuration (which is reproduced from Figure 1c of Application Note AN1059). As discussed in the above-referenced application notes, some common examples of applications for which the flyback converter configuration of Fig. 10 may be useful include low power switching power supplies, AC-DC adapters for mobile or office equipment, and off-line battery chargers, all of which are configured to provide power to generally predictable and relatively stable (fixed) loads.

In a manner similar to that discussed above in connection with Figs. 7-9, the ST L6561-based flyback converter configuration of Fig. 10 includes a voltage regulation feedback control loop 80, which receives as an input a sample of the DC output voltage 32 *($V_{out}$)* and provides as feedback an error signal 38B which is applied to the INV input of the L6561 controller 36A. The error signal 38B is illustrated with dashed lines in Fig. 10 to indicate that this signal is optically isolated from the transformer secondary but nonetheless provides an electrical representation of the DC output voltage 32. In conventional implementations involving the ST L6561 or ST L6562 switch controllers for a high power factor single switching stage DC-DC converter, the INV input (pin 1) of these controllers (the inverting input of the controller's internal error amplifier) typically is coupled to a signal representing the positive potential of the DC output voltage 32 (e.g., via the optoisolator and TL431 zener diode configuration as shown in Fig. 10). The internal error amplifier of the controller 36A in turn compares the error signal 38B with an internal reference so as to maintain an essentially constant (i.e., regulated) output voltage 32.

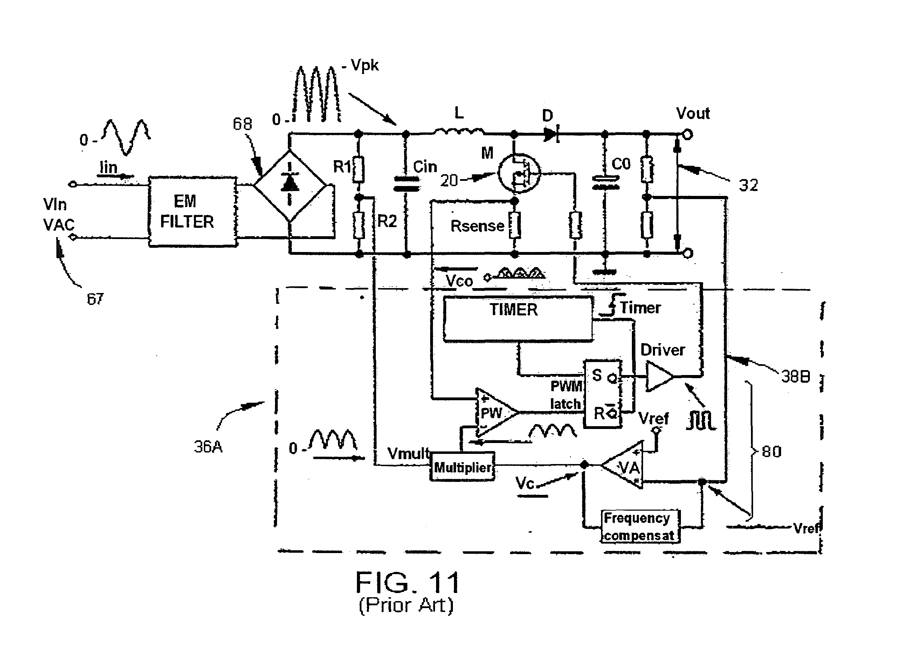

ST Microelectronics Applicant Note AN1792, entitled "Design of Fixed-Off-Time-Controlled PFC Pre-regulators with the L6562," by Claudio Andragna, November 2003, available at http://www.st.com and incorporated herein by reference, discloses another approach for controlling a power factor corrector pre-regulator as an alternative to the transition mode method and the fixed frequency continuous conduction mode method. Specifically, a "fixed-off-time" (FOT) control method may be employed with the L6562 controller, for example, in which only the on-time of a pulse width modulated signal is modulated, and the off-time is kept constant (leading to a modulation in switching frequency). Fig. 11 illustrates a block diagram of an FOT-controlled PFC regulator (which is adapted from Figure 3 of Application Note AN1792). Like the transition mode approach, it can be observed from Fig. 11 that the fixed-off-time control method contemplated using the L6562 controller similarly requires a voltage regulation feedback control loop 80, which provides an error signal 38B representing the output voltage 32 (via a resistor divider network) to an error amplifier VA internal to the controller 36A. The controller 36A in turn controls the switch 20 (labeled as M in Fig. 11) so as to implement the FOT control, based at least in part on the fed back error signal 38B. In the implementation of Fig. 11, no optical isolation of the error signal 38B is required, as the converter configuration illustrated does not employ a transformer.

**Summary**

Applicants have recognized and appreciated that employing a single-switching stage high power factor DC-DC converter (similar to that shown in Figs. 10-11) in power supplies for relatively low power lighting apparatus (e.g., approximately 10-300 Watts) may provide noteworthy advantages in lighting systems employing a significant number of such apparatus, and/or in applications in which it is desirable to control the light output (brightness) of one or more lighting apparatus using conventional line voltage dimmers.

In particular, although the power factor of a given low power lighting apparatus may not be significant in and of itself with respect to the current-handling capability of an overall circuit from which the apparatus may draw power (e.g., a 15 - 20 Amp A.C. circuit at a conventional U.S. or European line voltage), the power factor of such devices becomes more of an issue when several such apparatus are placed on the same A.C. circuit. Specifically, the higher the power factor of the individual low power lighting apparatus, the greater the number of such apparatus that may be safely and reasonably placed on the same power circuit. Accordingly, more complex lighting system installations may be implemented with greater numbers of high power factor, relatively low power, lighting apparatus. Additionally, a high power factor lighting apparatus employing a switching DC-DC converter design appears to a line voltage as an essentially resistive load; thus, such apparatus are particularly well-suited for use with conventional dimming devices (e.g., voltage amplitude or duty cycle control) that are employed, for example, to adjust the light output of conventional light sources such as incandescent sources.

In view of the foregoing, the high power factor flyback converter arrangement of Fig. 10 provides a potentially attractive candidate for use in a power source for a relatively low power lighting apparatus. Amongst the attractive attributes of such a supply are a relatively low size and parts count, in that only a single switching stage is required (i.e., a separate power factor correction apparatus is not required in addition to a DC-DC converter stage) to provide a high power factor.

Applicants have recognized and appreciated, however, that further improvements may be made to circuits based on the general architecture of Figs. 10-11 (i.e., single-switching stage high power factor DC-DC converter). In particular, for implementations involving essentially fixed/stable load power requirements, the voltage regulation feedback control loop 80 to provide either an isolated or non-isolated error signal 38B is not necessary to achieve effective operation of at least some types of loads coupled to the DC output voltage of the switching power supply. Additionally, DC-DC configurations other than a flyback converter, such as a buck converter of a boost converter, may be employed, again without a feedback control loop 80, to provide appropriate power to a fixed/stable load. Specifically, for loads involving light emitting diodes (LEDs), Applicants have recognized and appreciated that LEDs themselves are essentially voltage regulation devices, and that a load constituted by a single LED or multiple LEDs interconnected in various series, parallel, or series/parallel configurations (an "LED-based light source") dictates a particular voltage across the load. Hence, a switching power supply generally based on the architecture of Figs. 10-11 may be reliably configured to provide an appropriate stable operating power to the load without requiring a feedback control loop.

In view of the foregoing, one embodiment of the present invention is directed to an apparatus that includes comprising a switching power supply configured to provide power factor correction and an output voltage to a load via control of a single switch, without requiring any feedback information associated with the load. In one aspect, the single switch is controlled without monitoring either the output voltage across the load or a current drawn by the load. In another aspect, the single switch is controlled without regulating either the output voltage across the load or a current drawn by the load. In yet another aspect, the output voltage is not variable independently of an A.C. input voltage applied to the power supply. In yet another aspect, the input voltage may be varied (e.g., the RMS value of an A.C. input voltage may be varied) via a conventional A.C. dimmer (e.g., using either a voltage amplitude or duty cycle control technique), to in turn control the output voltage. In other aspects, the switching power supply may comprise a flyback converter configuration, a buck converter configuration, or a boost converter configuration.

Another embodiment of the present invention is directed to a method that includes an act of providing power factor correction and an output voltage to a load via control of a single switch, without requiring any feedback information associated with the load. In one aspect, the single switch is controlled without monitoring either the output voltage across the load or a current drawn by the load. In another aspect, the single switch is controlled without regulating either the output voltage across the load or a current drawn by the load. In yet another aspect, the output voltage is not variable independently of an A.C. input voltage applied to the power supply. In yet another aspect, the input voltage may be varied (e.g., the RMS value of an A.C. input voltage may be varied) via a conventional A.C. dimmer (e.g., using either a voltage amplitude or duty cycle control technique), to in turn control the output voltage.

Another embodiment of the present invention is directed to a lighting apparatus that includes at least one LED-based light source, and a switching power supply configured to provide power factor correction and an output (supply) voltage to the at least one LED-based light source via control of a single switch, without requiring any feedback information associated with the LED-based light source(s). In one aspect, the single switch is controlled without monitoring either the output voltage across the LED-based light source(s) or a current drawn by the LED-based light source(s). In another aspect, the single switch is controlled without regulating either the voltage across the LED-based light source (s) or a current drawn by the LED-based light source(s). In yet another aspect, the supply voltage is not variable independently of an A.C. input voltage to the power supply. In yet another aspect, the A.C. input voltage may be varied (e.g., the RMS value of an A.C. input voltage may be varied) via a conventional A.C. dimmer (e.g., using either a voltage amplitude or duty cycle control technique) to in turn control a brightness of light generated by the at least one LED-based light source. In other aspects, the switching power supply may comprise a flyback converter configuration, a buck converter configuration, or a boost converter configuration.

Still another embodiment of the present disclosure is directed to a lighting apparatus that includes at least one LED-based light source and a switching power supply to provide power factor correction and an output voltage to the at least one LED-based light source via control of a single switch, without requiring any feedback information associated with the at least one LED-based light source. The switching power supply includes the single switch and a transition mode power factor corrector controller coupled to the single switch, wherein the controller is configured to control the single switch using a fixed off time (FOT) control technique. In one aspect, the controller does not have any input that receives a signal relating to the output voltage across the at least one LED-based light source or a current drawn by the at least one LED-based light source during normal operation of the lighting apparatus.

Yet another embodiment of the present invention is directed to a lighting system that includes at least one LED-based light source, and a switching power supply configured to provide power factor correction and an output (supply) voltage to the at least one LED-based light source via control of a single switch, without requiring any feedback information associated with the LED-based light source(s). The lighting apparatus further includes an A.C. dimmer to vary an A.C. input voltage applied to the power supply. In one aspect, the single switch is controlled without monitoring either the output voltage across the LED-based light source(s) or a current drawn by the LED-based light source(s). In another aspect, the single switch is controlled without regulating either the voltage across the LED-based light source (s) or a current drawn by the LED-based light source(s). In yet another aspect, the output voltage is not variable independently of the A.C. input voltage applied to the power supply. In yet another aspect, the A.C. dimmer uses either a voltage amplitude or duty cycle control technique to vary an input voltage (e.g., the RMS value of an A.C. input voltage may be varied) and in turn control a brightness of light generated by the at least one LED-based light source. In other aspects, the switching power supply may comprise a flyback converter configuration, a buck converter configuration, or a boost converter configuration.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

**Brief Description of the Drawings**

In the drawings, like reference characters generally refer to the same parts throughout the different views. Also, the drawings are not necessarily to scale, emphasis instead generally being placed upon illustrating the principles of the invention.

Fig. 1 is a circuit diagram of a conventional step-down or "buck" type DC-DC converter.

Fig. 2 is a diagram illustrating various operating signals associated with the DC-DC converter of Fig. 1.

Fig. 3 is a diagram particularly illustrating inductor current vs. applied voltage during two consecutive switching operations in the converter of Fig. 1.

Fig. 4 is a circuit diagram of a conventional step-up or "boost" type DC-DC converter.

Fig. 5 is a circuit diagram of a conventional inverting or "buck-boost" type DC-DC converter.

Fig. 6 is a circuit diagram of a conventional "CUK" type DC-DC converter.

Fig. 7 is a circuit diagram of a buck-boost converter similar to that shown in Fig. 5, configured for current-mode operation.

Fig. 8 is a circuit diagram of a conventional "flyback" type DC-DC converter.

Fig. 9 is a circuit diagram of a conventional "forward" type DC-DC converter.

Fig. 9A is a circuit diagram of a conventional power factor correction apparatus based on a boost converter topology.

Fig. 9B is a diagram that conceptually illustrates the functionality of a power factor correction controller of the power factor correction apparatus shown in Fig. 9A.

Fig. 10 is circuit diagram of a flyback type DC-DC converter employing an ST Microelectronics L6561 power factor controller in a non-standard configuration.

Fig. 11 is a block diagram of a DC-DC converter employing an ST Microelectronics L6562 power factor controller in a non-standard configuration employing a "fixed-off-time" control method.

Fig. 12 is a schematic diagram of a lighting apparatus according to one embodiment of the present invention.

Fig. 12A is a block diagram of a lighting system according to one embodiment of the present invention.

Figs. 13-16 are schematic diagrams of a lighting apparatus according to other embodiments of the present invention.

**Detailed Description**

As discussed above, various embodiments of the present invention are directed to methods, apparatus and systems in which power is supplied to a load via a switching power supply, wherein power may be provided to the load without requiring any feedback information associated with the load. Of particular interest in some embodiments are high power factor single switching stage DC-DC converters for relatively low power applications (e.g., up to approximately 10-300 Watts). One type of load of particular interest in some embodiments of the present invention includes one or more light-emitting diode (LED) light sources, constituting an "LED-based light source." Accordingly, one exemplary apparatus according to the present invention is directed to a lighting apparatus in which the load includes an LED-based light source that receives operating power from high power factor single switching stage DC-DC converter, without requiring any feedback information associated with the LED-based light source.

For purposes of the present disclosure, the phrase "feedback information associated with the load" refers to information relating to the load (e.g., a load voltage and/or load current) obtained during normal operation of the load (i.e., while the load performs its intended functionality), which information is fed back to the power supply providing power to the load so as to facilitate stable operation of the power supply (e.g., the provision of a regulated output voltage). Thus, the phrase "without requiring any feedback information associated with the load" refers to implementations in which the power supply providing power to the load does not require any feedback information to maintain normal operation of itself and the load (i.e., when the load is performing its intended functionality).

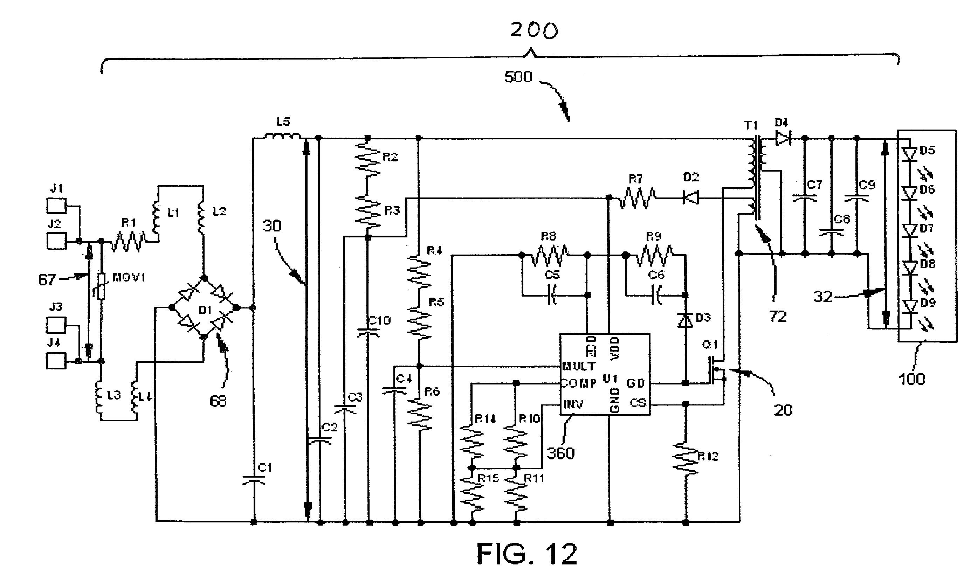

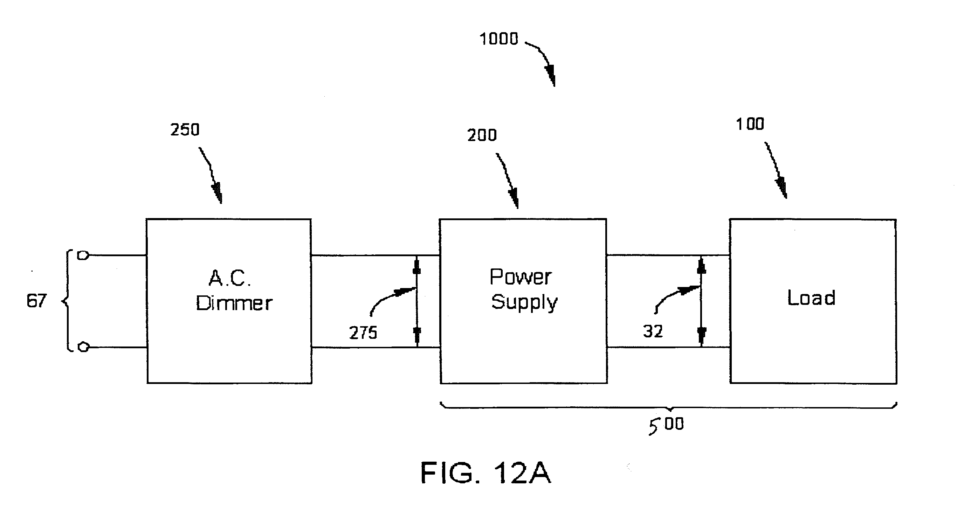

Fig. 12 is a schematic circuit diagram illustrating an example of a lighting apparatus 500 that incorporates a high power factor, single switching stage, power supply 200 according to one embodiment of the present invention. Referring to Fig. 12, one exemplary configuration for the power supply 200 of the lighting apparatus 500 is based on the flyback converter arrangement employing a switch controller 360 Implemented by the ST6561 or ST6562 switch controller discussed above in connection with Figs. 10-11. An A.C. input voltage 67 is applied to the power supply 200 at the terminals J1 and J2 (or J3 and J4) shown on the far left of the schematic, and a D.C. output voltage 32 (or supply voltage) is applied across a load 100, which in the example of Fig. 12 includes an LED-based light source having five series-connected LEDS, as illustrated on the far right of the schematic. In one aspect, the output voltage 32 is not variable independently of the A.C. input voltage 67 applied to the power supply 200; stated differently, for a given A.C. input voltage 67, the output voltage 32 applied across the load 100 remains substantially stable and fixed. It should be appreciated that the particular load 100 is provided primarily for purposes of illustration, and that the present disclosure is not limited in this respect; for example, in other embodiments of the invention, an LED-based light source serving as the load 100 may include a same or different number of LEDs interconnected in any of a variety of series, parallel, or series/parallel arrangements. Also, as indicated in Table 1 below, the lighting apparatus 500 may be configured for a variety of different input voltages, based on an appropriate selection of various circuit components (resistor values in Ohms).

Table 1

| A.C. Input Voltage | R2 | R3 | R4 | R5 | R6 | R8 | R10 | R11 | Q1 |
|---|---|---|---|---|---|---|---|---|---|
| 120 V | 150K | 150K | 750K | 750K | 10.0K 1% | 7.5K | 3.90K 1% | 20.0K 1% | 2SK3050 |
| 230 V | 300K | 300K | 1.5M | 1.5M | 4.99K 1% | 11K | 4.30K 1% | 20.0K 1% | STD1NK80Z |
| 100 V | 150K | 150K | 750K | 750K | 10.0K 1% | 7.5K | 2.49K 1% | 10.0K 1% | 2SK3050 |
| 120 V | 150K | 150K | 750K | 750K | 10.0K 1% | 7.5K | 3.90K 1% | 20.0K 1% | 2SK3050 |

(continued)

| A.C. Input Voltage | R2 | R3 | R4 | R5 | R6 | R8 | R10 | R11 | Q1 |
|---|---|---|---|---|---|---|---|---|---|
| 230 V | 300K | 300K | 1.5M | 1.5M | 4.99K 1% | 11K | 4.30K 1% | 20.0K 1% | STD1NK80Z |
| 100 V | 150K | 150K | 750K | 750K | 10.0K 1% | 7.5K | 2.49K 1% | 10.0K 1% | 2SK3050 |

In one aspect of the embodiment shown in Fig. 12, the controller 360 is configured to employ the fixed-off time (FOT) control technique to control the switch 20 (Q1). The FOT control technique allows the use of a relatively smaller transformer 72 for the flyback configuration. This allows the transformer to be operated at a more constant frequency, which in turn delivers higher power to the load 100 for a given core size.

In another aspect, unlike conventional switching power supply configurations employing either the L6561 or L6562 switch controllers (as discussed above in connection with Figs. 10 and 11), the switching power supply 200 of Fig. 12 does not require any feedback information associated with the load 100 to facilitate control of the switch 20 (Q1). With reference again for the moment to Figs. 10-11, in conventional implementations involving the STL6561 or STL6562 switch controllers the INV input (pin 1) of these controllers (the inverting input of the controller's internal error amplifier) typically is coupled to a signal representing the positive potential of the output voltage (e.g., via an external resistor divider network and/or an optoisolator circuit), so as to provide feedback associated with the load 100 to the switch controller. The controller's internal error amplifier compares a portion of the fed back output voltage with an internal reference so as to maintain an essentially constant (i.e., regulated) output voltage.

In contrast to these conventional arrangements, in the circuit of Fig. 12, the INV input of the switch controller 360 is coupled to ground potential via the resistor R11, and is not in any way deriving feedback from the load 100 (e.g., there is no electrical connection between the controller 360 and the positive potential of the output voltage 32 when it is applied to the load 100). More generally, in various inventive embodiments disclosed herein, the switch 20 (Q1) may be controlled without monitoring either the output voltage 32 across the load 100 or a current drawn by the load 100 when the load is electrically connected to the output voltage 32. Similarly, the switch Q1 may be controlled without regulating either the output voltage 32 across the load 100 or a current drawn by the load. Again, this can be readily observed in the schematic of Fig. 12, in that the positive potential of the output voltage 32 (applied to the anode of LED D5 of the load 100) is not electrically connected or "fed back" to any component on the primary side of transformer 72.

By eliminating the requirement for feedback, various lighting apparatus according to the present invention employing a switching power supply may be implemented with fewer components at a reduced size/cost. Also, due to the high power factor correction provided by the circuit arrangement shown in Fig. 12, the lighting apparatus 500 appears as an essentially resistive element to the applied input voltage 67.

In some exemplary implementations, as shown in Fig. 12A for example, a lighting system 1000 may include the lighting apparatus 500 of Fig. 12 (i.e., the power supply 200 and the load 100) coupled to an A.C. dimmer 250, wherein an A.C. voltage 275 applied to the power supply 200 is derived from the output of the A.C. dimmer (which in turn receives as an input the A.C. line voltage 67). In various aspects, the voltage 275 provided by the A.C. dimmer 250 may be a voltage amplitude controlled or duty-cycle (phase) controlled A.C. voltage, for example. In one exemplary implementation, by varying an RMS value of the A.C. voltage 275 applied to the power supply 200 via the A.C. dimmer 250, the output voltage 32 to the load may be similarly varied. In implementations in which the load 100 is an LED-based light source, for example, the A.C. dimmer 250 may thusly be employed to vary a brightness of light generated by the LEDs.

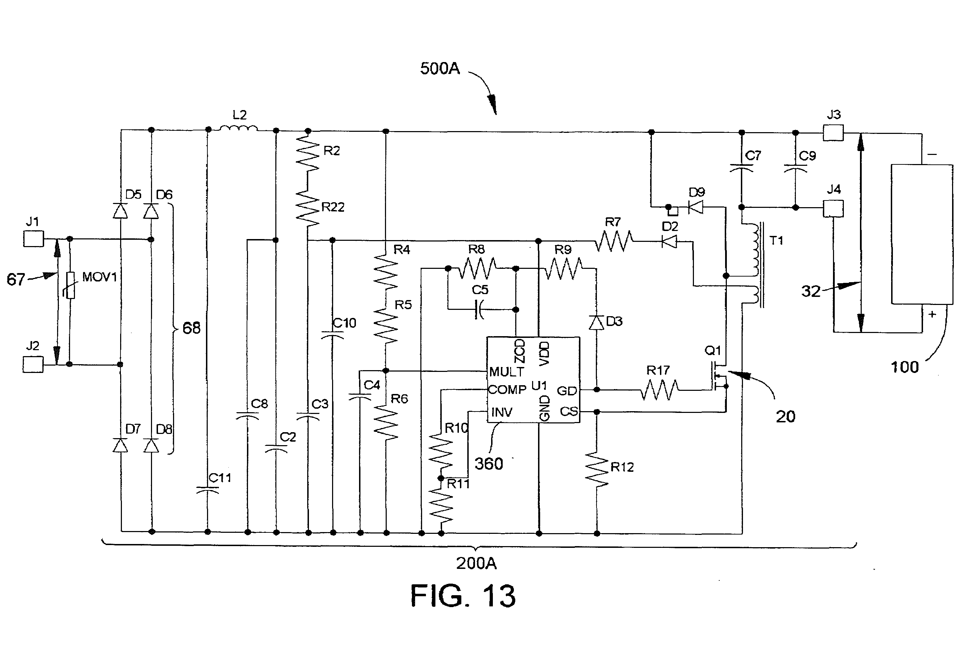

Fig. 13 is a schematic circuit diagram illustrating an example of a lighting apparatus 500A according to another embodiment of the present invention that includes a high power factor single switching stage power supply 200A. Referring to Fig. 13, the power supply 200A is similar in several respect to that shown in Fig. 12; however, rather than employing a transformer in a flyback converter configuration, the power supply of Fig. 13 employs a buck converter topology. This allows a significant reduction in losses when the power supply is configured such that the output voltage is a fraction of the input voltage. The circuit of Fig. 13, like the flyback design employed in Fig. 12, achieves a high power factor. In one exemplary implementation, the power supply 200A is configured to accept an input voltage 67 of 120 VAC and provide an output voltage 32 in the range of approximately 30 to 70 VDC. This range of output voltages mitigates against increasing losses at lower output voltages (resulting in lower efficiency), as well as line current distortion (measured as increases in harmonics or decreases in power factor) at higher output voltages.

The circuit of Fig. 13 utilizes the same design principles which result in the apparatus exhibiting a fairly constant input resistance as the input voltage 67 is varied. The condition of constant input resistance may be compromised, however, if either 1) the AC input voltage is less than the output voltage, or 2) the buck converter is not operated in the continuous mode of operation. Harmonic distortion is caused by 1) and is unavoidable. Its effects can only be reduced by changing the output voltage allowed by the load. This sets the practical upper bound on the output voltage. Depending on the maximum allowed harmonic content, this voltage seems to allow about 40% of the expected peak input voltage. Harmonic distortion is also caused by 2), but its effect is less important because the inductor (in transformer T1) can be sized to put the transition between continuous/discontinuous mode close to the voltage imposed by 1).

In another aspect, the circuit of Fig. 13 uses a high speed Silicon Carbide Schottky diode (diode D9) in the buck converter configuration. The diode D9 allows the fixed-off time control method to be used with the buck converter configuration. This feature also limits the lower voltage performance of the power supply. As output voltage is reduced, a larger efficiency loss is imposed by the diode D9. For appreciably lower output voltages, the flyback topology used in Fig. 12 may be preferable in some instances, as the flyback topology allows more time and a lower reverse voltage at the output diode to achieve reverse recovery, and allows the use of higher speed, but lower voltage diodes, as well as silicon Schottky diodes as the voltages are reduced. Nonetheless, the use of a high speed Silicon Carbide Schottky diode in the circuit of Fig. 13 allows FOT control while maintaining a sufficiently high efficiency at relatively low output power levels.

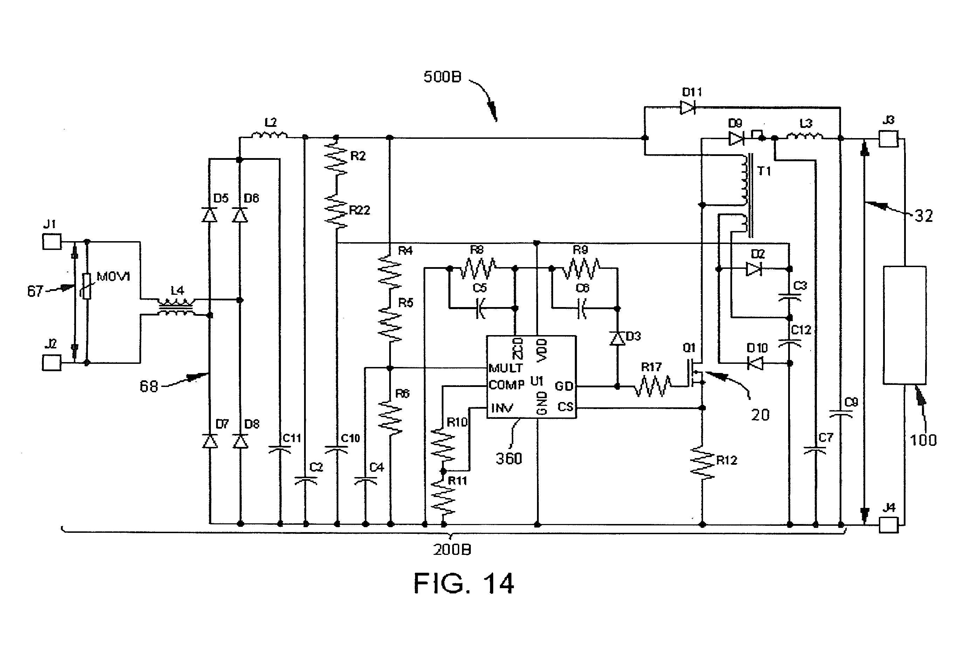

Fig. 14 is a schematic circuit diagram illustrating an example of a lighting apparatus 500B according to another embodiment of the present disclosure, including a high power factor single switching stage power supply 200B. In the circuit of Fig. 14, a boost converter topology is employed for the power supply 200B. This design also utilizes the fixed off time (FOT) control method, and employs a Silicon Carbide Schottky diode to achieve a sufficiently high efficiency.

Still referring to Fig. 14, the range for the output voltage 32 is from slightly above the expected peak of the A.C. input voltage, to approximately three times this voltage. The particular circuit component values illustrated in Fig. 14 provide an output voltage 32 on the order of approximately 300VDC. In some implementations of lighting apparatus 500B employing the power supply 200B and a load including in LED-based light source, the power supply is configured such that the output voltage is nominally between 1.4 and 2 times the peak A.C. input voltage. The lower limit (1.4x) is primarily an issue of reliability; since it is worthwhile to avoid input voltage transient protection circuitry due to its cost, a fair amount of voltage margin may be preferred before current is forced to flow through the load. At the higher end (2x), it may be preferable in some instances to limit the maximum output voltage, since both switching and conduction losses increase as the square of the output voltage. Thus, higher efficiency can be obtained if this output voltage is chosen at some modest level above the input voltage.

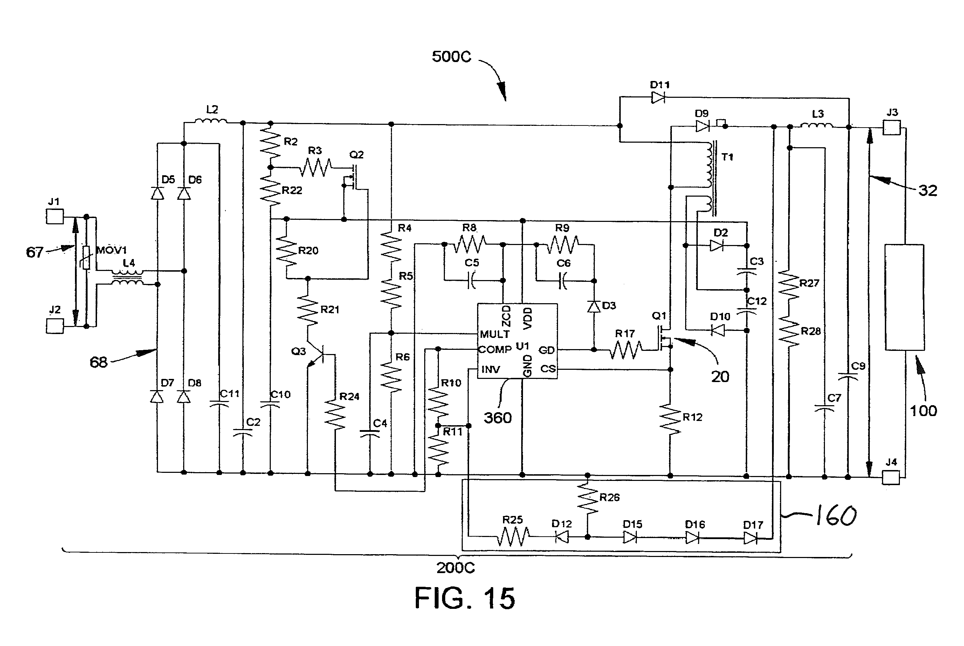

Fig. 15 is a schematic diagram of a lighting apparatus 500C according to another embodiment of the present invention, including a power supply 200C based on the boost converter topology discussed above in connection with Fig. 14. Because of the potentially high output voltages provided by the boost converter topology, in the embodiment of Fig. 15, an over-voltage protection circuit 160 is employed to ensure that the power supply 200C ceases operation if the output voltage 32 exceeds a predetermined value. In one exemplary implementation, the over-voltage protection circuit includes three series-connected zener diodes D 15, D16 and D 17 that conduct current if the output voltage 32 exceeds approximately 350 Volts.

More generally, the over-voltage protection circuit 160 is configured to operate only in situations in which the load 100 ceases conducting current from the power supply 200C, i.e., if the load 100 is not connected or malfunctions and ceases normal operation. The over-voltage protection circuit 160 is ultimately coupled to the INV input of the controller 360 input so as to shut down operation of the controller 360 (and hence the power supply 200C) if an over-voltage condition exists. In these respects, it should be appreciated that the over-voltage protection circuit 160 does not provide feedback associated with the load 100 to the controller 360 so as to facilitate regulation of the output voltage 32 during normal operation of the apparatus; rather, the over-voltage protection circuit 160 functions only to shut down/prohibit operation of the power supply 200C if a load is not present, disconnected, or otherwise fails to conduct current from the power supply (i.e., to cease normal operation of the apparatus entirely).

As indicated in Table 2 below, the lighting apparatus 500C of FIG. 15 may be configured for a variety of different input voltages, based on an appropriate selection of various circuit components.

Table 2

| A.C. Input Voltage | R4 | R5 | R10 | R11 |
|---|---|---|---|---|
| 120 V | 750K | 750K | 10K 1% | 20.0K 1% |
| 220 V | 1.5M | 1.5M | 2.49K 1% | 18.2K 1% |
| 100 V | 750K | 750K | 2.49K 1% | 10.0K 1% |
| 120 V | 750K | 750K | 3.90K 1% | 20.0K 1% |
| 220 V | 1.5M | 1.5M | 2.49K 1% | 18.2K 1% |
| 100 V | 750K | 750K | 2.49K 1% | 10.0K 1% |

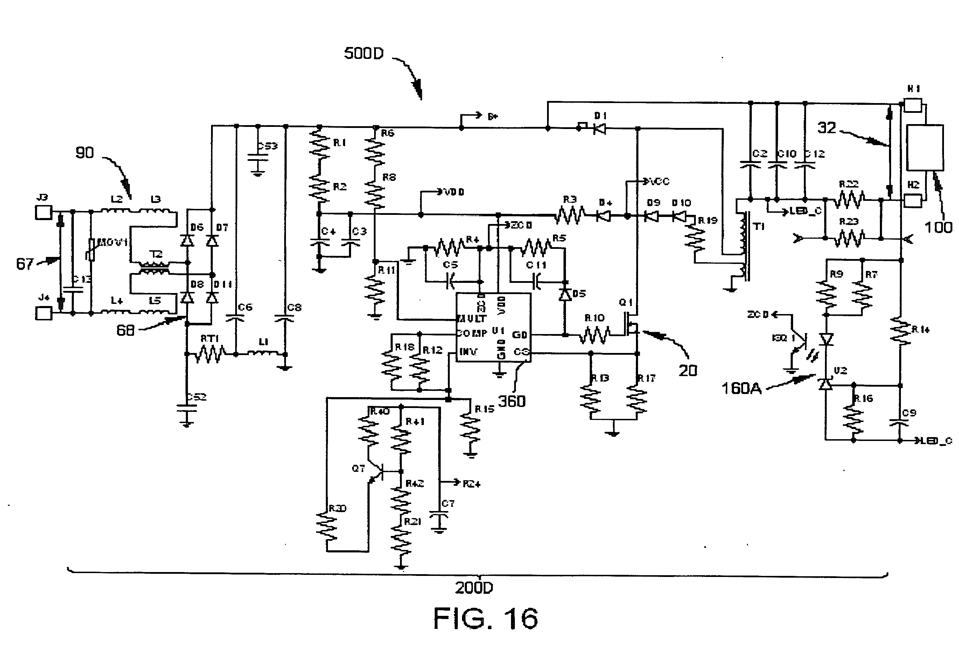

Fig. 16 is a schematic diagram of a lighting apparatus 500D according to another embodiment of the present invention, including a power supply 200D based on the buck converter topology discussed above in connection with Fig. 13, but with some additional features relating to over-voltage protection and reducing electromagnetic radiation emitted by the power supply. These emissions can occur both by radiation into the atmosphere and by conduction into wires carrying the A.C. input voltage 67.

In some exemplary implementations, the power supply 200D is configured to meet Class B standards for electromagnetic emissions set in the United States by the Federal Communications Commission and/or to meet standards set in the European Community for electromagnetic emissions from lighting fixtures, as set forth in the British Standards document entitled "Limits and Methods of Measurement of Radio Disturbance Characteristics of Electrical Lighting and Similar Equipment," EN 55015:2001, Incorporating Amendments Nos. 1, 2 and Corrigendum No. 1, the entire contents of which are hereby incorporated by reference. For example, in one implementation, the power supply 200D includes an electromagnetic emissions ("EMI") filter circuit 90 having various components coupled to the bridge rectifier 68. In one aspect, the EMI filter circuit is configured to fit within a very limited space in a cost-effective manner; it is also compatible with conventional A.C. dimmers, so that the overall capacitance is at a low enough level to avoid flickering of light generated by the LED-based light source 100. The values for the components of the EMI filter circuit 90 in one exemplary implementation are given in the table below:

| Component | Characteristics |
| --- | --- |
| C13 | 0.15 $\mu$F; 250/275 VAC |
| C52, C53 | 2200pF; 250 VAC |
| C6, C8 | 0.12 $\mu$F; 630V |
| L1 | Magnetic inductor; 1 mH; 0.20 A |
| L2, L3, L4, L5 | Magnetic ferrite inductor; 200 mA; 2700 ohm; 100 MHz; SM 0805 |
| T2 | Magnetic, choke transformer; common mode; 16.5 MH PC MNT |

As further illustrated in Fig. 16 (as indicated at power supply connection "H3" to a local ground "F"), in another aspect the power supply 200D includes a shield connection, which also reduces the frequency noise of the power supply. In particular, in addition to the two electrical connections between the positive and negative potentials of the output voltage 32 and the LED-based light source 100, a third connection is provided between the power supply and the LED-based light source 100. For example, in one implementation, an LED-based light source 100 may include a printed circuit board on which one or more LEDs are disposed (an "LED PCB"). Such an LED PCB may in turn include several conductive layers that are electrically isolated from one another. One of these layers, which includes the LED light sources, may be the top-most layer and receive the cathodic connection (to the negative potential of the output voltage). Another of these layers may lie beneath the LED layer and receives the anodic connection (to the positive potential of the output voltage). A third "shield" layer may lie beneath the anodic layer and may be connected to the shield connector. During the operation of the lighting apparatus, the shield layer functions to reduce/eliminate capacitive coupling to the LED layer and thereby suppresses frequency noise. In yet another aspect of the apparatus shown in Fig. 16, and as indicated on the circuit diagram at the ground connection to C52, the EMI filter circuit 90 has a connection to a safety ground, which may provided via a conductive finger clip to a housing of the apparatus 500D (rather than by a wire connected by screws), which allows for a more compact, easy to assemble configuration than conventional wire ground connections.

In yet other aspects of the apparatus 500D shown in Fig. 16, the power supply 200D includes various circuitry to protect against an over-voltage condition for the output voltage 32. In particular, in one exemplary implementation output capacitors C2 and C10 may be specified for a maximum voltage rating of approximately 60 Volts (e.g., 63 Volts), based on an expected range of output voltages of approximately 50 Volts or lower. As discussed above in connection with Fig. 15, in the absence of any load on the power supply, or malfunction of a load leading to no current being drawn from the power supply, the output voltage 32 would rise and exceed the voltage rating of the output capacitors, leading to possible destruction. To mitigate this situation, the power supply 200D includes an over-voltage protection circuit 160A, including an optoisolator ISO1 having an output that, when activated, coupled the ZCD (zero current detect) input of the controller 360 (i.e., pin 5 of U1) to local ground "F". Various component values of the over-voltage protection circuit 160A are selected such that a ground present on the ZCD input terminated operation of the controller 360 when the output voltage 32 reaches about 50 Volts. As also discussed above in connection with Fig. 15, again it should be appreciated that the over-voltage protection circuit 160A does not provide feedback associated with the load 100 to the controller 360 so as to facilitate regulation of the output voltage 32 during normal operation of the apparatus; rather, the over-voltage protection circuit 160A functions only to shut down/prohibit operation of the power supply 200D if a load is not present, disconnected, or otherwise fails to conduct current from the power supply (i.e., to cease normal operation of the apparatus entirely).

Fig.16 also shows that the current path to the load 100 includes current sensing resistors R22 and R23, coupled to test points TPOINT1 and TPOINT2. These test points are not used to provide any feedback to the controller 360 or any other component of the apparatus 500D. Rather, the test points TPOINT1 and TPOINT2 provide access points for a test technician to measure load current during the manufacturing and assembly process and, with measurements of load voltage, determine whether or not the load power falls within a prescribed manufacturer's specification for the apparatus.

As indicated in Table 3 below, the lighting apparatus 500D of Fig. 16 may be configured for a variety of different input voltages, based on an appropriate selection of various circuit components.

Table 3

| A.C. Input Voltage | R6 | R8 | R1 | R2 | R4 | R18 | R17 | R10 | C13 |
|---|---|---|---|---|---|---|---|---|---|
| 100 V | 750K 1% | 750K 1% | 150K | 150K | 24.0K 1% | 21.0K.1% | 2.00 1% | 22 | 0.15 μF |
| 120 V | 750K 1% | 750K 1% | 150K | 150K | 24.0K 1% | 12.4K 1% | 2.00 1% | 22 | 0.15 μF |
| 230 V | 1.5M 1% | 1.5M 1% | 300K | 300K | 27.0K 1% | 24.0K 1% | OMIT | 10 | 0.15 μF |
| 277 V | 1.5M 1% | 1.5M 1% | 300K | 300K | 27.0K 1% | 10K 1% | OMIT | 10 | OMIT |

While various inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

1. A lighting apparatus, comprising:

   at least one LED-based light source; and
   a switching power supply for providing power factor correction and an output voltage to the at least one LED-based light source via control of a single switch, without requiring any feedback information associated with the at least one LED-based light source.

2. The apparatus of clause 1, wherein the single switch is controlled without monitoring either the output voltage across the at least one LED-based light source or a current drawn by the at least one LED-based light source.

3. The apparatus of clause 1, wherein the single switch is controlled without regulating either the output voltage across the at least one LED-based light source or a current drawn by the at least one LED-based light source.

4. The apparatus of clause 1, wherein the switching power supply receives as an input an A.C. input voltage, and wherein the output voltage and/or power provided to the at least one LED-based light source is not variable independently of the A.C. input voltage applied to the power supply.

5. The apparatus of clause 4, wherein the output voltage and/or the power provided to the at least one LED-based light source is significantly variable only in response to variations in an RMS value of the A.C. input voltage.

6. The apparatus of clause 1, further comprising an A.C. dimmer for varying an RMS value of an A.C. input voltage applied to the power supply.

7. The apparatus of clause 1, wherein the switching power supply comprises a flyback converter configuration, a buck converter configuration, or a boost converter configuration.

8. The apparatus of clause 1, wherein the switching power supply comprises a boost converter configuration including an over-voltage protection circuit for shutting down the switching power supply if the output voltage exceeds a predetermined value.

9. The apparatus of clause 1, wherein the switching power supply includes at least one controller coupled to the single switch, the at least one controller controlling the single switch using a fixed off time (FOT) control technique.

10. A lighting method, comprising:

    A) providing power factor correction and an output voltage to at least one LED-based light source via control of a single switch, without requiring any feedback information associated with the at least one LED-based light source.

11. The method of clause 10, wherein A) comprises:

    controlling the single switch without monitoring either the output voltage across the at least one LED-based light source or a current drawn by the at least one LED-based light source.

12. The method of clause 10, wherein A) comprises:

controlling the single switch without regulating either the output voltage across the at least one LED-based light source or a current drawn by the at least one LED-based light source.

13. The method of clause 10, wherein A) comprises:

controlling the single switch using a fixed off time (FOT) control technique.

14. The method of clause 10, further comprising:

varying the output voltage across the at least one LED-based light source only in response to variations in an RMS value of an A.C. input voltage applied to the power supply.

15. The method of clause 10, further comprising:

terminating A) if the output voltage exceeds a predetermined value.

16. A lighting apparatus, comprising:

at least one LED-based light source; and
a switching power supply for providing power factor correction and an output voltage to the at least one LED-based light source via control of a single switch, without requiring any feedback information associated with the at least one LED-based light source, the switching power supply comprising:

the single switch; and
a transition mode power factor corrector controller coupled to the single switch, wherein the controller is configured to control the single switch using a fixed off time (FOT) control technique, and wherein the controller does not have any input that receives a signal relating to the output voltage across the at least one LED-based light source or a current drawn by the at least one LED-based light source during normal operation of the lighting apparatus.

17. The apparatus of clause 16, further comprising an A.C. dimmer for varying an RMS value of an A.C. input voltage applied to the power supply.

18. The apparatus of clause 16, wherein the switching power supply comprises a boost converter configuration including an over-voltage protection circuit to shut down the switching power supply if the output voltage exceeds a predetermined value.

19. A lighting system, comprising:

at least one LED-based light source;
a switching power supply for providing power factor correction and an output voltage to the at least one LED-based light source via control of a single switch, without requiring any feedback information associated with the at least one LED-based light source; and
an A.C. dimmer to vary an RMS value of an A.C. input voltage applied to the power supply, wherein the output voltage to the at least one LED-based light source varies based at least in part on the RMS value of the A.C. input voltage.

20. The system of clause 19, wherein the A.C. dimmer provides the A.C. input voltage applied to the power supply as an amplitude-modulated A.C. input voltage.

21. The system of clause 19, wherein the A.C. dimmer provides the AC. input voltage applied to the power supply as a duty-cycle-modulated A.C. input voltage.

**Claims**

1. An apparatus for a switching power supply (200) for providing power factor correction and an output voltage (32) to at least one LED-based light source (100) via control of a single switch (20), without requiring a voltage regulation feedback control loop associated with the at least one LED-based light source during normal operation of the LED-based light source, the apparatus comprising at least one controller (360) coupled to the single switch (20) for controlling the single switch using a fixed off time (FOT) control technique.

2. An apparatus as claimed in claim 1 further comprising an over-voltage protection circuit (160) for shut-down of the power supply upon failure to conduct current to the LED-based light source.

3. An apparatus as claimed in claim 1 or 2, wherein the at least one controller comprises a transition mode power factor corrector controller (360) coupled to the single switch and configured to control the single switch by means of the fixed off time (FOT) control technique.

4. An apparatus as claimed in any preceding claim, wherein the at least one controller (360) has an input for receiving a signal relating to a current through the single switch (20).

5. An apparatus as claimed in any preceding claim, wherein the at least one controller (360) has an input for receiving a signal relating to a current drawn by the at least one LED-based light source during normal operation of the lighting apparatus.

6. An apparatus as claimed in any preceding claim, configured to terminate the power factor correction in response to a predetermined event.

7. A lighting apparatus (500), comprising an apparatus in accordance with any preceding claim and at least one LED-based light source (100).

8. A lighting apparatus as claimed in claim 7, comprising a transformer (72) between the at least one controller (360) and the at least one LED-based light source (100).

9. A method for providing power factor correction and an output voltage (32) by a switching power supply (200) to at least one LED-based light source (100) via control of a single switch (20) without requiring a voltage regulation feedback control loop associated with the at least one LED-based light source during normal operation of the LED-based light source, the method comprising using a fixed off time (FOT) control technique for the control of the single switch by at least one controller (360) coupled to the single switch (20).

10. A method as claimed in claim 9, further comprising over-voltage protection (160) by shutting down the power supply upon failure to conduct current to the LED-based light source

11. A method as claimed in claim 9 or claim 10, comprising controlling the single switch (20) by a transition mode power factor corrector controller (360).

12. A method as claimed in any one of claims 9 to 11, wherein the at least one controller (360) has an input for receiving a signal relating to a current through the single switch (20)..

13. A method as claimed as claimed in any one of claims 9 to 12, wherein the at least one controller (360) has an input for receiving a signal relating to a current drawn by the at least one LED-based light source during normal operation of the lighting apparatus.

14. A method as claimed in any one of claims 9 to 13, comprising operating a transformer (72) between the at least one controller (360) and the at least one LED-based light source (100) in a relatively constant frequency.

15. A method as claimed in any one of claims 9 to 14, comprising terminating the power factor correction if the output voltage exceeds a predetermined value.

FIG. 1
(Prior Art)

FIG. 2

(Prior Art)

FIG. 3
(Prior Art)

52

$I_L$

D1

$I_{load}$

22 L

Input from
Feedback
Control Loop

20

24

30 $V_{in}$

C

34

40 Load

$V_{out}$

32

44

To
Feedback
Control Loop 46

## FIG.4
(Prior Art)

54

20

D1

$I_{load}$

44

$I_L$

24

30 $V_{in}$

L

C

Load

$V_{out}$

22

34

32

Input from
Feedback
Control Loop

$I_L$

To
Feedback
Control Loop 46

## FIG. 5
(Prior Art)

56

$L_1$

$C_1$

$L_2$

$+$ $V_{in}$

$I_{L1}$

$+$ $V_{c1}$ $-$

$I_{L2}$

Input from
Feedback
Control Loop

44

20

D1

24

40

C

34

Load

$V_{out}$

30

$-$

32

To
Feedback
Control Loop 46

## FIG. 6
(Prior Art)

FIG. 7
(Prior Art)

FIG. 8
(Prior Art)

EP 2 592 904 A1

FIG. 9
(Prior Art)

FIG.9A
(Prior Art)

FIG. 9B
(Prior Art)

FIG. 10
(Prior Art)

FIG. 11
(Prior Art)

**FIG. 12**

EP 2 592 904 A1

EP 2 592 904 A1

1000

250　　　　　　200　　　　　　100

A.C.
Dimmer

Power
Supply

Load

67

275

32

5 00

FIG. 12A

FIG. 13

FIG. 14

FIG. 15

FIG. 16

EP 2 592 904 A1

Europäisches
Patentamt

European
Patent Office

Office européen
des brevets

## EUROPEAN SEARCH REPORT

Application Number

EP 12 19 6570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 519 164 B1 (WENG DAFENG [US] ET AL) 11 February 2003 (2003-02-11) * column 4, line 1 - column 5, line 52 * | 1-15 | INV. H05B33/08 |
| Y | US 5 661 645 A (HOCHSTEIN PETER A [US]) 26 August 1997 (1997-08-26) * column 5, line 30 - column 6, line 13 * * column 10, line 62 - column 13, line 7 * | 1-15 | |
| X | US 2006/214603 A1 (OH IN-HWAN [US] ET AL) 28 September 2006 (2006-09-28) * abstract * * paragraph [0021] - paragraph [0025] * | 1-15 | |
| Y | US 2003/161169 A1 (KWON BONG-HWAN [KR]) 28 August 2003 (2003-08-28) * paragraph [0021] - paragraph [0031] * | 1-15 | |
| Y | US 2005/213352 A1 (LYS IHOR A [US]) 29 September 2005 (2005-09-29) * paragraph [0248] - paragraph [0251] * | 1-15 | TECHNICAL FIELDS SEARCHED (IPC) |
| Y,P | US 2007/188114 A1 (LYS IHOR A [US] ET AL) 16 August 2007 (2007-08-16) * the whole document * | 1-15 | F21V F21S F21K H05B |
| X,D | CLAUDIO ANDRAGNA: "Design ofFixed-Off-Time-Controlled PFC Pre-regulators with the L6562", ST MICROELECTRONICS APPLICATION NOTE AN1792, November 2003 (2003-11), XP007921730, | 1,4 | |
| A | * the whole document * | 2,3,5-15 | |

The present search report has been drawn up for all claims

| Place of search | Date of completion of the search | Examiner |
|---|---|---|
| Munich | 4 April 2013 | Kahn, Klaus-Dieter |

EPO FORM 1503 03.82 (P04C01)

## ANNEX TO THE EUROPEAN SEARCH REPORT
## ON EUROPEAN PATENT APPLICATION NO.

EP 12 19 6570

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2013

| Patent document cited in search report | | Publication date | Patent family member(s) | | Publication date |
|---|---|---|---|---|---|
| US 6519164 | B1 | 11-02-2003 | NONE | | |
| US 5661645 | A | 26-08-1997 | AU | 3399097 A | 14-01-1998 |
| | | | CA | 2259258 A1 | 31-12-1997 |
| | | | EP | 0907999 A1 | 14-04-1999 |
| | | | US | RE42161 E1 | 22-02-2011 |
| | | | US | 5661645 A | 26-08-1997 |
| | | | WO | 9750168 A1 | 31-12-1997 |
| US 2006214603 | A1 | 28-09-2006 | CN | 101199239 A | 11-06-2008 |
| | | | JP | 2008537459 A | 11-09-2008 |
| | | | KR | 20080002852 A | 04-01-2008 |
| | | | US | 2006214603 A1 | 28-09-2006 |
| | | | WO | 2006102355 A2 | 28-09-2006 |
| US 2003161169 | A1 | 28-08-2003 | KR | 20030070273 A | 30-08-2003 |
| | | | US | 2003161169 A1 | 28-08-2003 |
| US 2005213352 | A1 | 29-09-2005 | AU | 2005222987 A1 | 29-09-2005 |
| | | | CA | 2559718 A1 | 29-09-2005 |
| | | | CA | 2730210 A1 | 29-09-2005 |
| | | | EP | 1731004 A2 | 13-12-2006 |
| | | | JP | 2007529872 A | 25-10-2007 |
| | | | JP | 2011188738 A | 22-09-2011 |
| | | | KR | 20060131985 A | 20-12-2006 |
| | | | US | 2005213352 A1 | 29-09-2005 |
| | | | US | 2005213353 A1 | 29-09-2005 |
| | | | US | 2005218838 A1 | 06-10-2005 |
| | | | US | 2005218870 A1 | 06-10-2005 |
| | | | US | 2005219872 A1 | 06-10-2005 |
| | | | US | 2005231133 A1 | 20-10-2005 |
| | | | US | 2008012502 A1 | 17-01-2008 |
| | | | WO | 2005089309 A2 | 29-09-2005 |
| US 2007188114 | A1 | 16-08-2007 | CA | 2642028 A1 | 23-08-2007 |
| | | | EP | 1984667 A2 | 29-10-2008 |
| | | | JP | 2009526365 A | 16-07-2009 |
| | | | KR | 20090077872 A | 16-07-2009 |
| | | | US | 2007188114 A1 | 16-08-2007 |
| | | | WO | 2007094810 A2 | 23-08-2007 |

EPO FORM P0459

For more details about this annex : see Official Journal of the European Patent Office, No. 12/82

## EP 2 592 904 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CLAUDIO ANDRAGNA.** Design of Fixed-Off-Time-Controlled PFC Pre-regulators with the L6562. *ST Microelectronics Applicant Note AN1792,* November 2003, http://www.st.com